# EUROPEAN PATENT SPECIFICATION

(11) **EP 1 171 234 B1**
(45) Date of publication and mention of the grant of the patent: **09.04.2003**
(21) Application number: 00927707.0
(22) Date of filing: 24.02.2000
(51) Int. Cl.: B01J 20/24, C02F 1/28

(54) **A NOVEL AGROPOLYMER USED FOR PURIFICATION OF POLLUTED WATER OR CONTAMINATED WATER CONTAINING METAL OR IONS AND A METHOD OF PRODUCING THE AGROPOLYMER**
NEUES AGROPOLYMER ZUR REINIGUNG VON VERUNREINIGTEM ODER MIT METALL ODER IONEN KONTAMINIERTEM WASSER UND VERFAHREN ZUR HERSTELLUNG DESSELBEN
POLYMERE D'ORIGINE AGRICOLE UTILISE POUR LA PURIFICATION D'EAU POLLUEE OU CONTAMINEE CONTENANT DU METAL OU DES IONS, ET PROCEDE DE PRODUCTION DE CE POLYMERE

(30) Priority: 24.02.1999 IN MA022299; 24.02.1999 IN MA022399
(43) Date of publication of application: 16.01.2002
(73) Proprietor: Bijam Biosciences Limited, Hyderabad 500 082 (IN)
(72) Inventor: PRASAD, Yandapalli Durga S/o Y. Chandramouliswara, Krishna District, 521 001 Andhra Pradesh (IN)
(74) Representative: Frith, Richard William
(86) International application number: PCT/IN00/00015
(87) International publication number: WO 00/050167

(56) References cited:
- WO-A1-93/12877
- WO-A1-95/02452
- DE-A1- 3 736 950

## Description

### FIELD OF THE INVENTION

This invention in general relates to the filed of agricultural bio-technology. In particular, this invention pertains to a novel agropolymer, a method of manufacturing the agropolymer from any plant parts such as seed coats, hulls, husks or seed covers of plants including agricultural crops (*Oryza sativa, Panicum miliaceum, Setaria italica, Cajanus cajan, Vigna mungo, Vigna radiata, Triticum sp., Ricinus communis, Helianthus annus, Gossypium sp. Arachis sp.).* These novel agropolymers have extensive industrial applications and also useful for water pollution control.

### BACKGROUND OF THE INVENTION

Many biological origin, metal sequestering substances were known such as Tannins, Humic acid, whole cell biomass, Chitin and Chitin derivatives, Metallothioneins, Microbial Polysaccharides, Melannins, Ployphenolic bipoigments, Bacterial cell wall polymers, Microbially produced chelating agents (Siderophores). However, the above materials are either costly, not available in sufficient quantity and / or less effective. On the other hand, the present research work is aimed to produce agropolymers from cheaply available plant materials, preferably, agricultural raw materials such as seed coats or hulls of agricultural crops (*Oryza sativa, Panicum miliaceum, Setaria italica, Cajanus cajan, Cigna mungo, Vigna radiata, Triticum sp., Ricinus communis, Helianthus annus, Gossypium sp. Arachis sp.)* These agropolymers have extensive industrial applications.

This invention has its application in the development of production of novel agropolymers preferably from seed coats or hulls of agricultural crops (*Oryza sativa, Panicum miliaceum, Setaria italica, Cajanus cajan, Vigna mungo, Vigna radiata,* *Triticum sp., Ricinus communis, Helianthus annus, Gossypium sp. Arachis sp.)* and their applications in metal sequestration and removal of ions.

Therefore, the objective of the present invention is to invent novel agropolymers from plant materials including seed coats of agricultural crops (*Oryza saliva, Panicum miliaceum, Setaria italica, Cajanus cajan, Vigna mungo, Vigna radiata, Triticum sp., Ricinus communis, Helianthus annus, Gossypium sp. Arachis sp.).* It is also the intention of invention to develop viable method for production agropolymers and use of such agropolymers to sequester or remove metals and / or ions. Thus, preferably, these agropolymers are produced from the seed coats or hulls of agricultural crops.

### OBJECTS OF THE INVENTION

Accordingly, it is the primary object of the invention is to invent bio-origin, non-toxic, biodegradable, cheaply available, very effective molecules/ polymers from agricultural sources, for industrial applications and water pollution control.

Another object of the invention is to develop production method for agropolymers from plant materials such as seed coats, husks, hulls, seed covers of agricultural crops (*Oryza sativa, Panicum miliaceum, Setaria italica, Cajanus cajun, Vigna mungo, Vigna radiata, Triticum sp., Ricinus communis, Helianthus annus, Gossypium sp. Arachis sp.).*

Yet, another object of the invention is to invent a polymer which will reduce environment pollution by using agriculturally derived metal and ion sequestering agropolymers from seed coats or hulls of agricultural crops.

Still another object of the invention is to provide a method of removal of heavy metals and ions from aqueous solutions using agropolymers of the invention.

One more object of the invention is to provide a method / technique to reduce metal and ion pollution from water to protect the environment.

Another object of the invention is to provide a method to convert the toxic metal and/or ion containing water to non-toxic, metal and/or ion free water by using agricultural crops derived non-toxic substances, which are biodegradable substances.

Another object of the invention is to provide a novel method to reduce environmental pollution by using agriculturally derived metal and ion sequestering agropolymers obtained from seed coats or hulls of agricultural crops.

### SUMMARY OF INVENTION

To meet the above objects and others, present invention provides a novel agropolymer comprising carbohydrate and / or silica matrix substantially devoid of at least proteins, tannins, pigments and polyphenols, and having metal binding reactive sites, a method of producing the agropolymers and use of such agropolymers to isolate or remove metals or ions from aqueous solutions, as defined in claims 1, 7 and 21.

### DETAILED DESCRIPTION OF THE INVENTION

Now, the invention will be described in detail so as to illustrate and explain various salient features of the invention.

The novel agropolymer has metal binding sites, which are incorporated, in a matrix of the agropolymer either by alkali treatment or hydrogen peroxide treatment or alkaline hydrogen peroxide treatment.

The matrix of the agropolymer is obtained from any plant parts such as seed coats, seed cover, hulls and husks. The metal binding reactive sites (organo-metallic bonds) which were created by reacting agropolymers with metal as observed under Infra Red (IR) Spectroscopy.

The agropolymers are obtained from plant materials selected from seed coats or hulls of agricultural crops (such as seed coats or hulls, from (*Oryza sativa, Panicum miliaceum, Setaria italica, Cajanus cajan, Vigna mungo, Vigna radiata, Triticum sp., Ricinus communis, Helianthus annus, Gossypium sp. Arachis sp.)* which have metal and ion sequestering nature.

The present invention provides also a method of producing agropolymers from a plant material such as seed coats or hulls of agricultural crops (seed coats or hulls, from *Oryza sativa, Panicum miliaceum, Setaria italica, Cajanus cajan, Vigna mungo, Vigna radiata, Triticum sp., Ricinus communis, Helianthus annus, Gossypium sp. Arachis sp.)*, said method comprising the following steps:-
- a.: powdering the seed coat or hull material,
- b.: micronization of seed coat or hull powder to required microns size,
- c.: treating the said micronized seed coat or hull powder in alkali or alkaline hydrogen peroxide or hydrogen peroxide,
- d.: treating the said material with repeated washings with water or with acid to remove alkali and or hydrogen peroxide residue,
- e.: treating the said material with acid solution to remove bound metals,
- f.: neutralizing the said molecules by removal of acid by way of water washings or by addition of diluted alkali solution and
- g.: drying the resultant agropolymers at room temperature or with a dryer (70-80°C).

In another embodiment, powdering of the seed coat or hull material was obtained by grinders and micronization of seed coat or hull power is effected using micronizer to obtain desired particle size (in microns).

In one more embodiment, the alkali treatment is effected with sodium hydroxide or potassium hydroxide or sodium carbonate or adding any alkali solution to the plant materials and/or adding hydrogen peroxide to the reaction mixture.

Hydrogen peroxide (5 to 30% concentration) treatment along with alkali (1 to 10% w/w) resulted in agropolymers with efficient metal sequestration. Alkali and or Hydrogen peroxide residues left after treatment were removed by repeated water washings or by addition of diluted acid (using such as H₂SO₄, HCL or HNO₃) separately.

In this method, if any bound metals are present in agropolymers, they are eluted with 1-3% acid solutions (using such as H₂SO₄ or HCL or HNO₃) and any acid residues left behind are removed by repeated water washings-or by addition of diluted alkali (using such as NaOH or KOH) solution, and moisture content left behind, which is being removed by decantation of supernatant followed by drying in a dryer (70-80°C) and / or drying at room temperature.

The alkali treatment without hydrogen peroxide also results agropolymers with metal sequestration particularly for the production of agropolymers from cereals and millets. The micronized seed coats or hulls are mixed with alkali (such as sodium hydroxide or potassium hydroxide). Alkali treatment is carried either by adding alkali solution to micronized seed coat or hull power or by adding directly alkali powder/flakes to micronized seed coat or hull powder later followed by addition of water. Alkali treatment releases dark brownish yellow colour substances from seed coats or hulls which are water soluble in nature. Lower percentage of alkali (5 to 7.5%) takes more retention time to remove these dark brownish yellow substances from seed coats or hulls where as higher percentage of alkali (20-25% solution) removes the dark brownish yellow substances within 3-4 hours. Alkali content is removed by repeated water washings or by addition of acid solution (such as HCL or H₂SO₄). The bound metals from resulting substances were removed by treating with mineral acids including sulfuric, nitric or hydrochloric (1-3%). The resultant material was neutralized with repeated water washings or by addition of required amount of 1M alkali (such as NaOH, KOH) solution. The material after removal of supernatant is dried at room temperature or in a drier (70-80°C). Lower the size, better the metal or ion sequestering property.

The yield of agropolymers depends on the size and reaction procedure adopted. Lower size agropolymers yield is less compared to big size agropolymers yield. Process losses are more to produce lower sizes agropolymers. The source of the material also decides the yield of the agropolymer. In general, about 30 to 40% yield of agropolymers was obtained in case of producing lower sizes agropolymers. About 75 to 80% yield of agropolymers is obtained in case of producing higher size (above 150 micron size) agropolymers.

The present method involves treating the plant material with alkali and / or Hydrogen peroxide. The plant material can be treated by alkaline hydrogen peroxide and in this case, the alkaline treatment can be performed before hydrogen peroxide treatment or along with hydrogen peroxide or after treatment with hydrogen peroxide. The most preferred embodiment involves treating the plant material with alkaline hydrogen peroxide combindly at one time.

The flow chart illustrates various stages / steps in the production of agropolymers.

The micronized seed coat or hulls powder is, treated with sulfuric acid or hydrochloric acid, (3-5%) for a period of 5-6 hours and the resultant material after removal of acid traces exhibited metal or ion sequestering property, but with less sequestering ability compared to agropolymers produced by alkali treatment method as described earlier.

One of the salient features of the invention is the identify agropolymers present in seed coats or hulls of agricultural crops (*Oryza saliva, Panicum miliaceum, Setaria italica, Cajanus cajan, Vigna mungo, Vigna radiata, Triticum sp., Ricinus communis, Helianthus annus, Gossypium sp. Arachis sp.).*

Another salient feature of the invention is regarding the production of agropolymers from seed coats or hulls or agricultural crops. For production of agropolymers from seed coats or hulls (such as seed coats or hulls, from *Oryza sativa*, *Panicum miliaceum, Setaria italica, Cajanus cajan, Vigna mungo, Vigna radiata, Triticum sp., Ricinus communis, Helianthus annus, Gossypium sp. Arachis sp.)* alkaline hydrogen peroxide treatment method was developed.

The agropolymers have extensive industrial applications. They can be effectively used for pollution control to protect environment from metal or ion contamination. The wide application of the said substance is an important aspect of the invention. Accordingly, the invention pertains to a method of producing agropolymers, preferably from seed coats or hulls of agricultural crops.

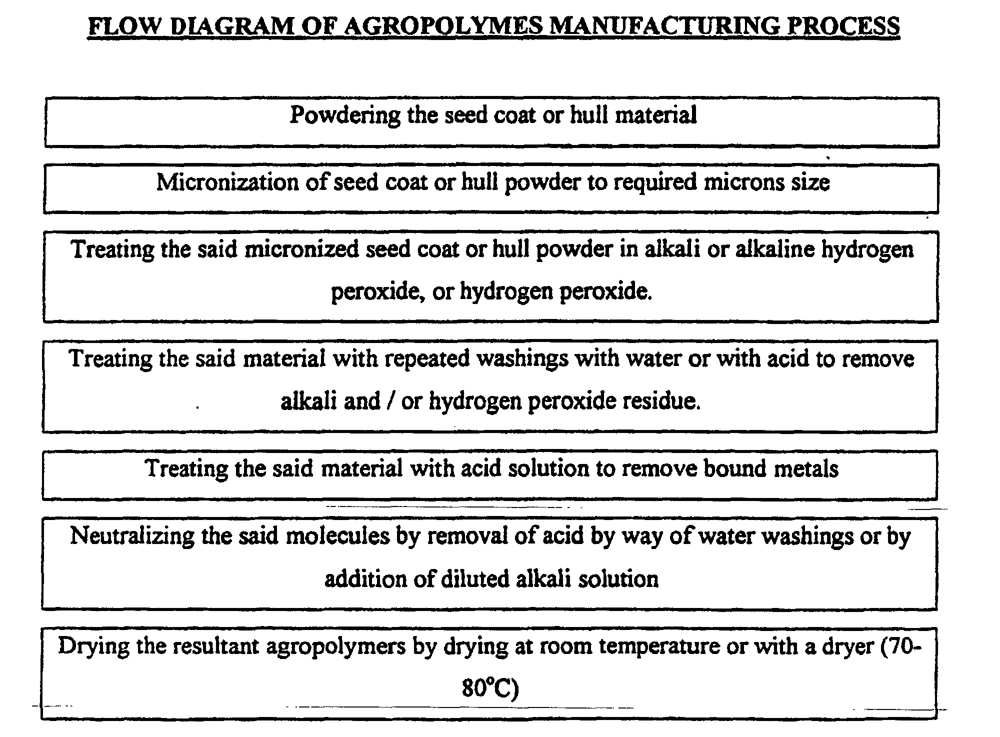

In another embodiment of the invention, the applicant provides method of treating metals / ions using the novel agropolymers of the present invention.

In particular, this invention pertains to a method of preventing environmental degradation by metal and ion pollution using agropolymers produced from seed coats or hulls of agricultural crops. More particularly, this invention relates to a method of purifying metal or ion polluted aqueous solution including metal or ion polluted industrial effluent ground water and drinking water. The method of purification is carried using a novel agropolymer which is capable of sequestering metals including metals like organic, mercury, etc. and/or ions from polluted water. The ultimate objective of the invention is to protect environment from metal and ion pollution. This objective is achieved not by synthetic route but by using natural biological, agricultural resources, which are abundant in nature. This invention has its salient feature resides in inventing substances and effective utilisation of this substances by using in novel technique to purify / sequester metals and or ions from polluted water.

In embodiment this present invention, a method of removal of metals and ions from aqueous solutions using agropolymers produced from seed coats or hulls of agricultural crops (from seed coats or hulls from *Oryza sativa, Panicum miliaceum, Setaria italica, Cajanus cajan, Vigna mungo, Vigna radiata, Triticum sp., Ricinus communis, Helianthus annus, Gossypium sp. Arachis sp*.,) is described. Many metals such as iron, copper, aluminium, arsenic, mercury, lead, zinc set and ions can be removed from an aqueous solution using the present novel agropolymer.

This invention Further relates effective utilization of metal and ion sequestering agropolymers from the seed coats or hulls of agricultural crops. This invention is useful for metal and ion pollution control using biotechnological approach for environmental protection. Although many plant substances are known for metal sequestration but production on large scale for industrial usage was not achieved so far due to many factors such as availability of raw materials and production costs. Many biological origin, metal sequestering substances were known such as Tannins, Humic acid, whole cell biomass, Chitin and Chitin derivatives, Metallothioneins, Microbial Polysaccharides, Melannins, Ployphenolic bipoigments, Bacterial cell wall polymers, Microbially produced chelating agents (Siderophores). Very few studies have been targeted to found utility in actual situations. As it is a growing area, experimental studies have been carried out in order to generate /produce / develop a utility method for this new kind of agropolymers from agricultural resources to find utility in actual situations.

The applicant has now devised a method for utilisation of metal and/or ion sequestering agropolymers obtained from seed coats or hulls of agricultural crops. Thus, according to this invention the agropolymers produced from the seed coats or hulls of agricultural crops are responsible for metal, and/or ion sequestering properly. For utility of metal and ions sequestering agropolymers from seed coats of agricultural crops, technically feasible and economically viable method are developed.

The present invention relates to a method for purification of a metal and ion polluted / contaminated aqueous solutions including metal or ion polluted drinking water or ground water, by treating the polluted water with agropolymers and or metal impregnated agropolymers, the said agropolymers being manufactured from plant materials such as seed coats, husks or hulls of the various agricultural crops (*Oryza sativa, Panicum miliaceum, Setaria italica, Cajanus cajan, Vigna mungo, Vigna radiata, Triticum sp., Ricinus communis, Helianthus annus, Gossypium sp. Arachis sp*.), the said method comprising the contacting the ion or metal polluted water with agropolymers and or metal impregnated agropolymer using a column or batch mode, effecting the ion or metal sequestration resulting in pollution free water, the said sequestration being carried out under optimum conditions (such as pH) for maximum sequestration efficiency.

In fact, the agropolymers being produced from seed husks, hulls or coats of agricultural crops such as *Oryza saliva, Panicum miliaceum, Setaria italica, Cajamis cajan, Vigna mungo, Vigna radiata, Triticum sp., Ricinus communis, Helianthus annus, Gossypium sp. Arachis sp.*) these agropolymers are capable of removal of metals or ions from aqueous solutions from PPM to PPB level.

Accordingly, the invention also envisages a method of treating metal or ion contaminated aqueous solution, the said method comprises by contacting the above defined polluted water with agropolymers (by column or batch mode), the said substances obtained from biological / agricultural plant sources (seed coats or hulls from plant material selected from agricultural plants such as *Oryza saliva, Panicum miliaceum, Setaria italica, Cajanus cajan, Vigna mungo, Vigna radiata, Triticum sp., Ricinus communis, Helianthus annus, Gossypium sp. Arachis sp*.,) which have ability to reduce metal and ion load from PPM and PPB level from polluted water, the said metal or ion comprising water by contacting with agropolymers on column or batch mode.

Further, the invention envisages a method of treating metal and/or ion polluted water where in the agropolymers are obtained from seed coats or hulls of agricultural crops (seed coats or hulls, from *Oryza sativa, Panicum miliaceum, Setaria italica, Cajanus cajan, Vigna mungo, Vigna radiata, Triticum sp., Ricinus communis, Helianthus annus, Gossypium sp. Arachis sp*.,). The agropolymers are also used in the possible sites of ground water contamination of toxic metals. In fact, the natural ground water which is rich in arsenic is treated with the agropolymers of the present invention and the results revealed that the arsenic content has been much reduced so that the arsenic rich water indeed become a potable water.

### BRIEF DESCRIPTION OF THE ACCOMPANYING DRAWINGS

In the enclosed drawings;

Raw husk, hull or coat was micronized and IR Spectroscopy was done with KBr pellet. Samples were treated with ferric chloride and dried before taking IR Spectroscopy with KBr pellet. IR Spectroscopy of each sample figure was done in three patterns; (1) total scan: 4000 to 500 wave numbers (cm-1), (2) scan from 4000 to 2200 wavenumbers (cm-1), and (3) scan from 2000 to 600 wavenumbers (cm-1).

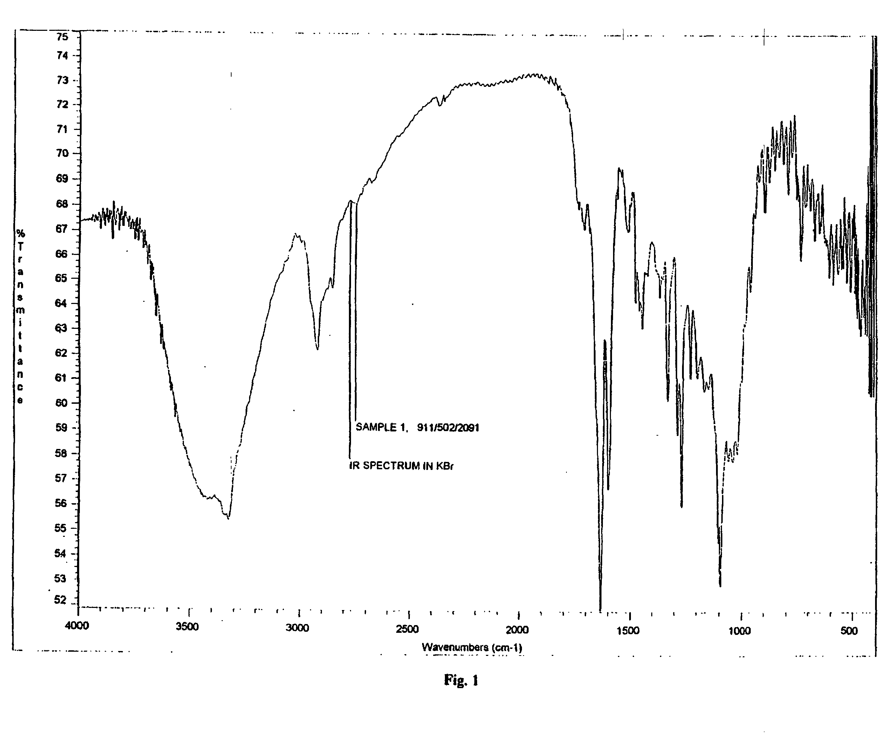

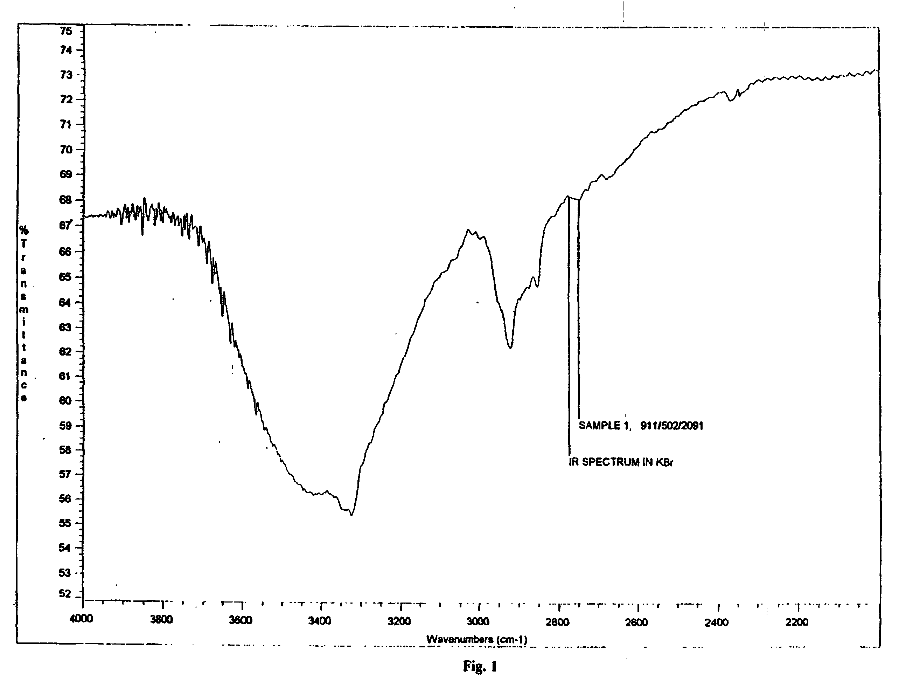

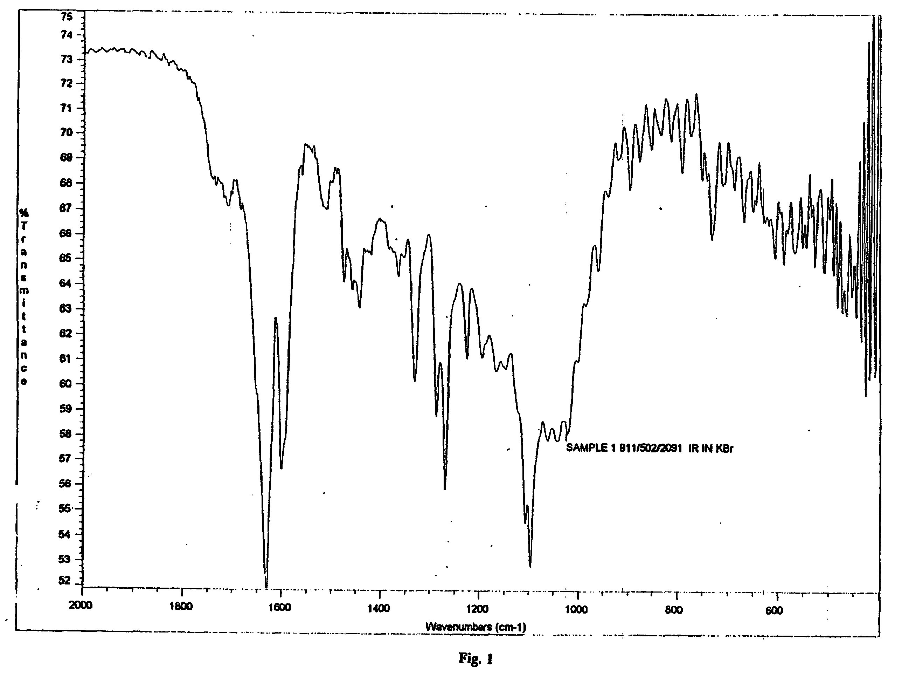

Figure 1 relates to IR Spectra of raw rice husk.

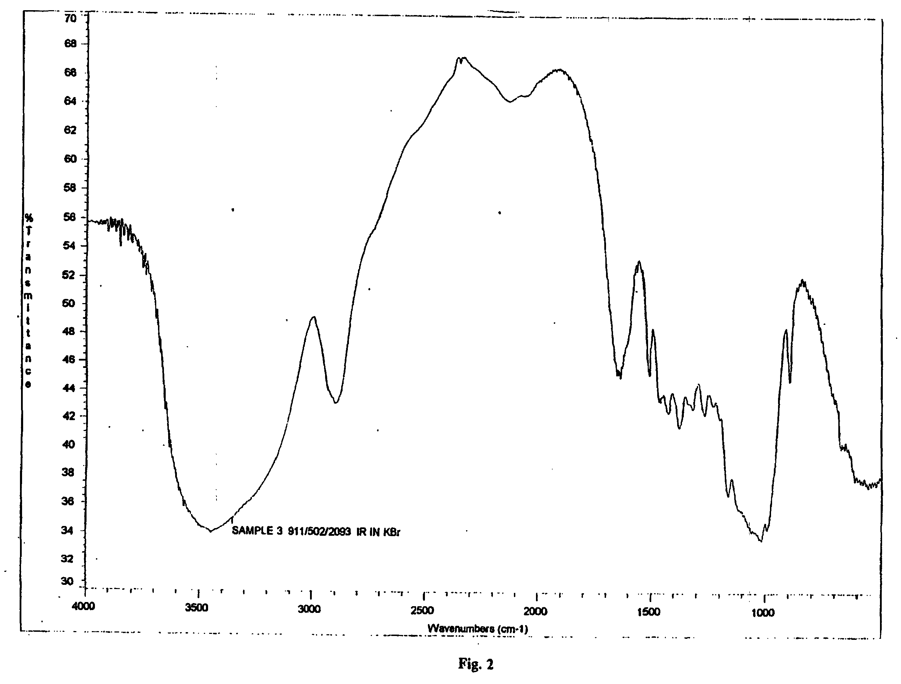

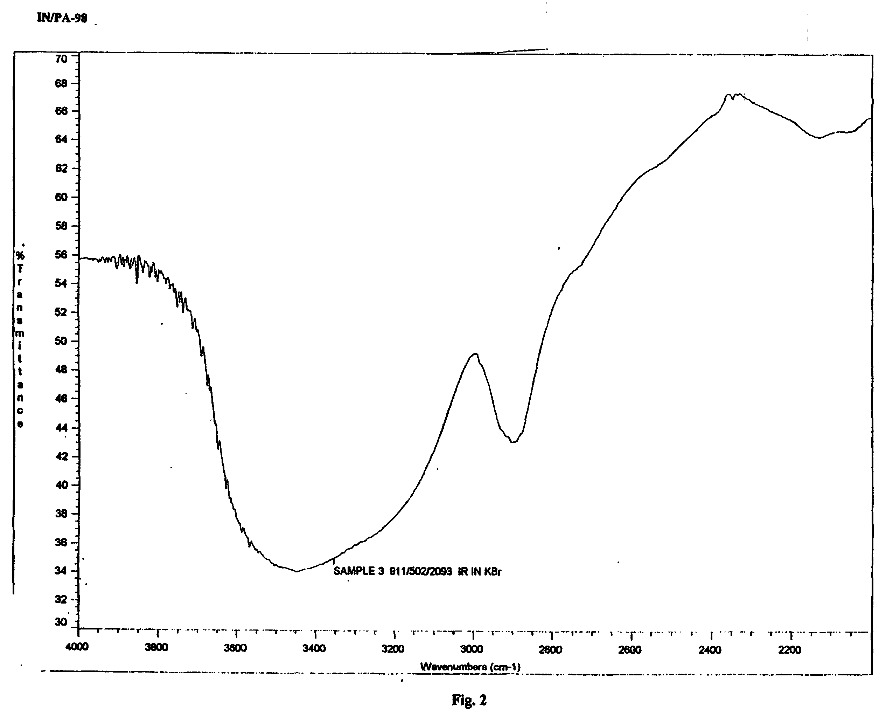

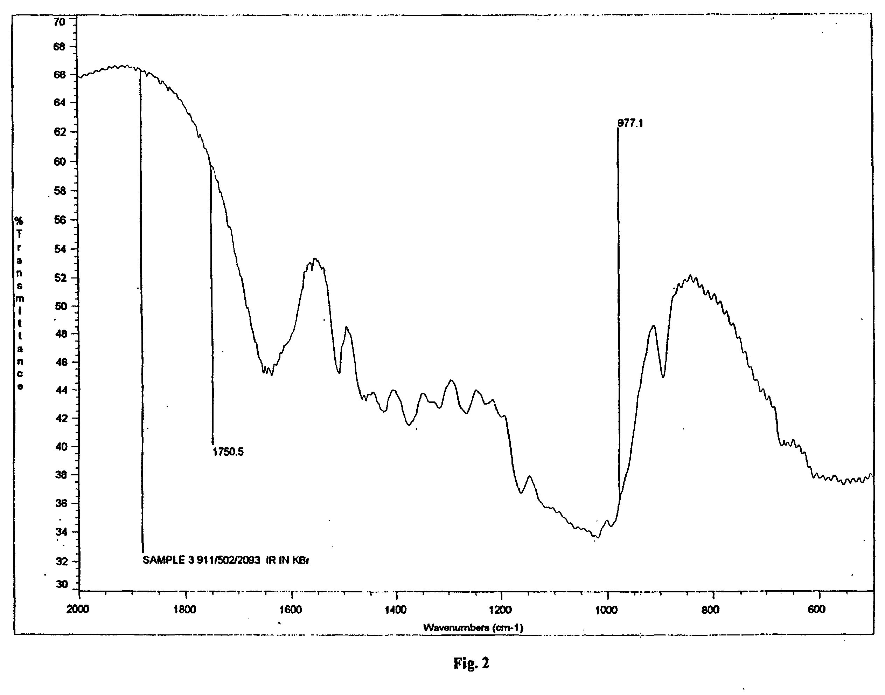

Figure 2 relates to IR Spectra of rice husk treated with alkaline hydrogen peroxide.

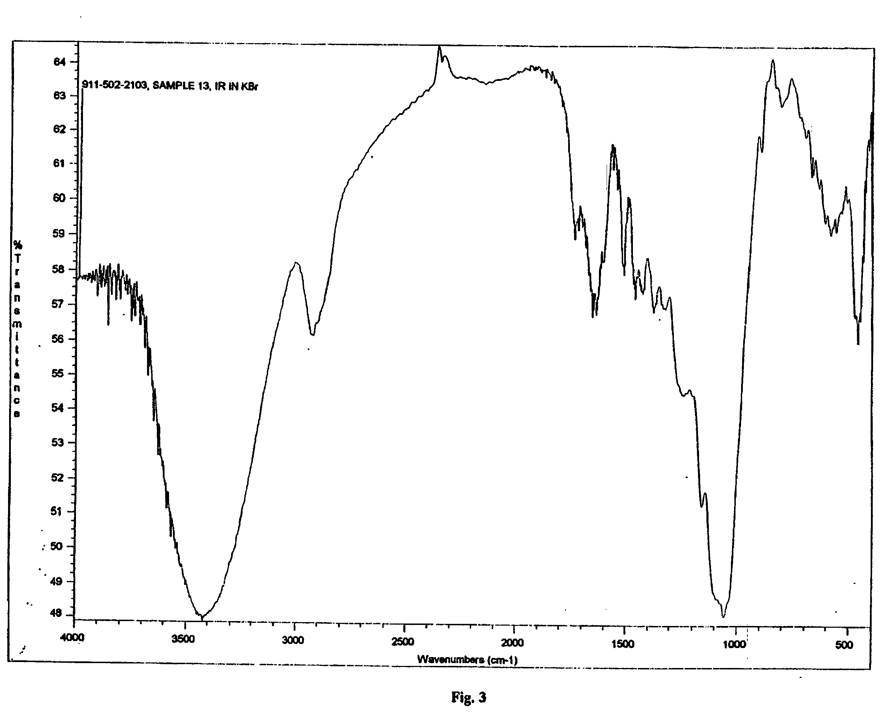

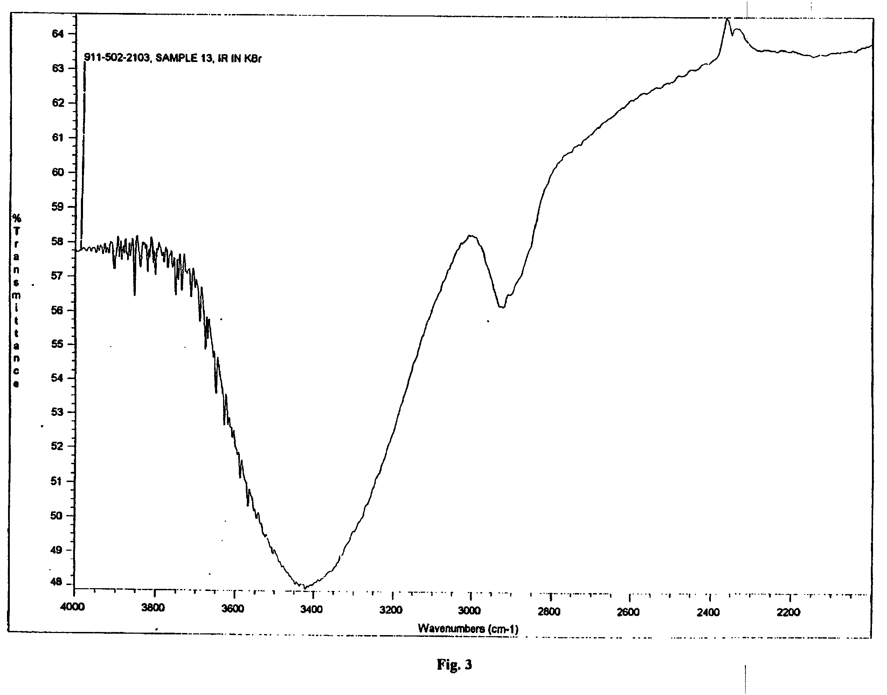

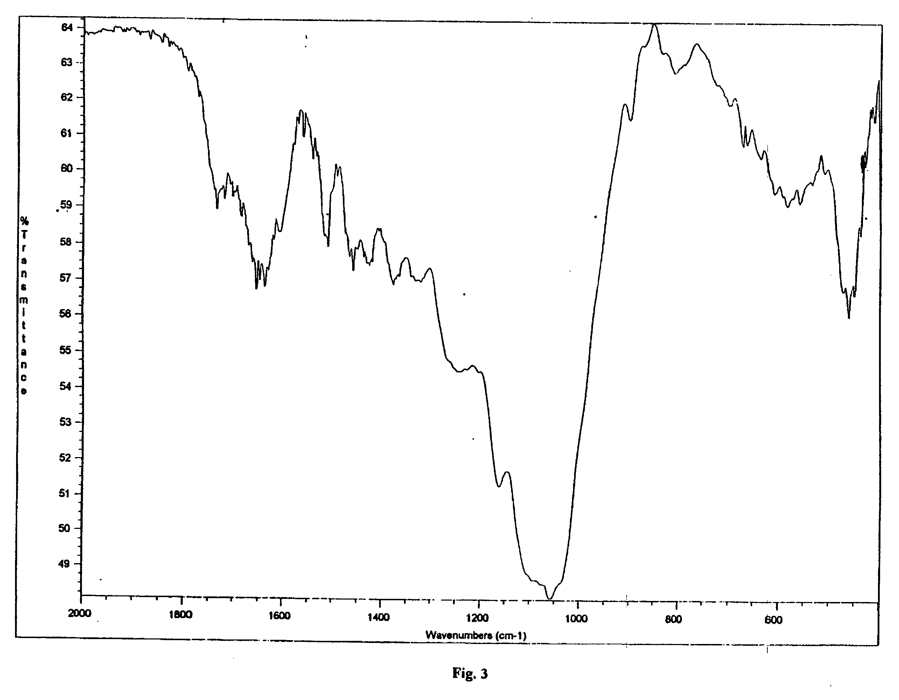

Figure 3 relates to IR Spectra of raw rice husk treated with ferric chloride.

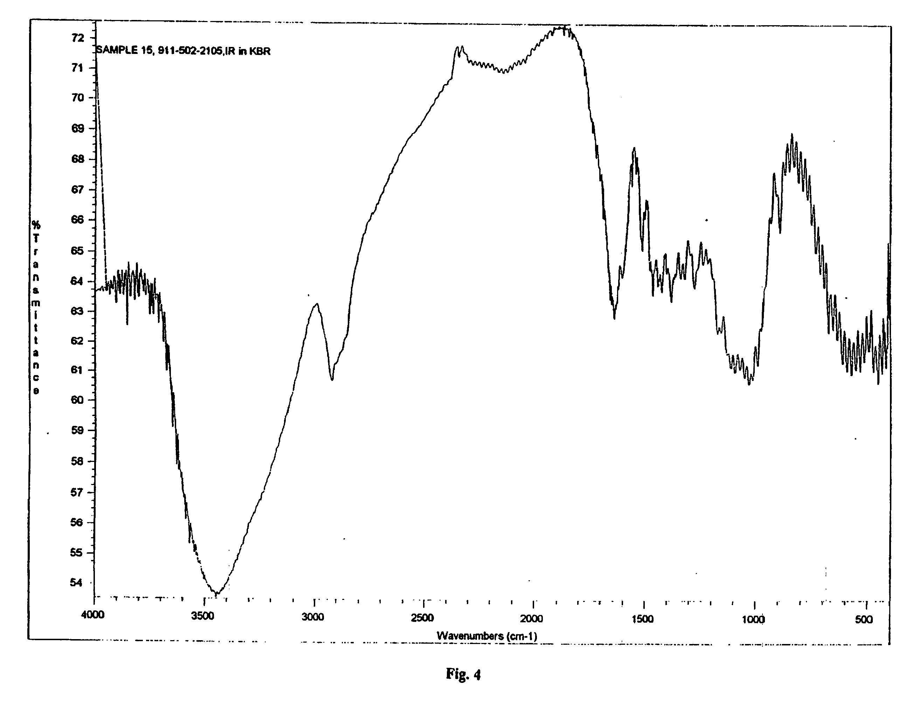

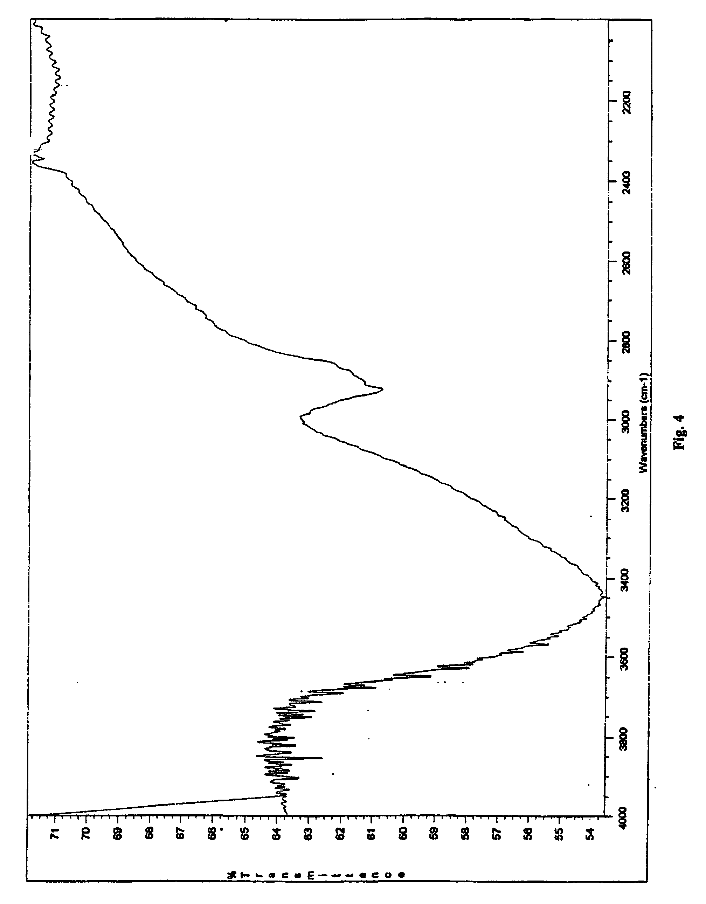

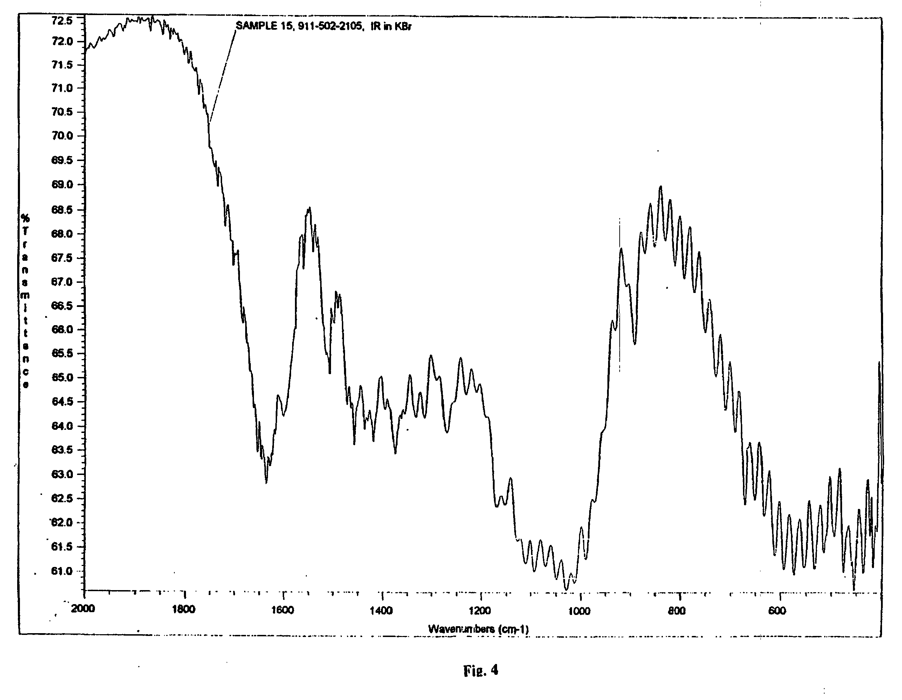

Figure 4 relates to IR Spectra of alkaline hydrogen peroxide treated rice husk which in turn treated with ferric chloride.
   As shown in IR Spectra of various samples of rice husk revealed that the alkaline hydrogen peroxide treatment to rice husk resulted in more reactive bonds i.e. organo-metallic bonds.

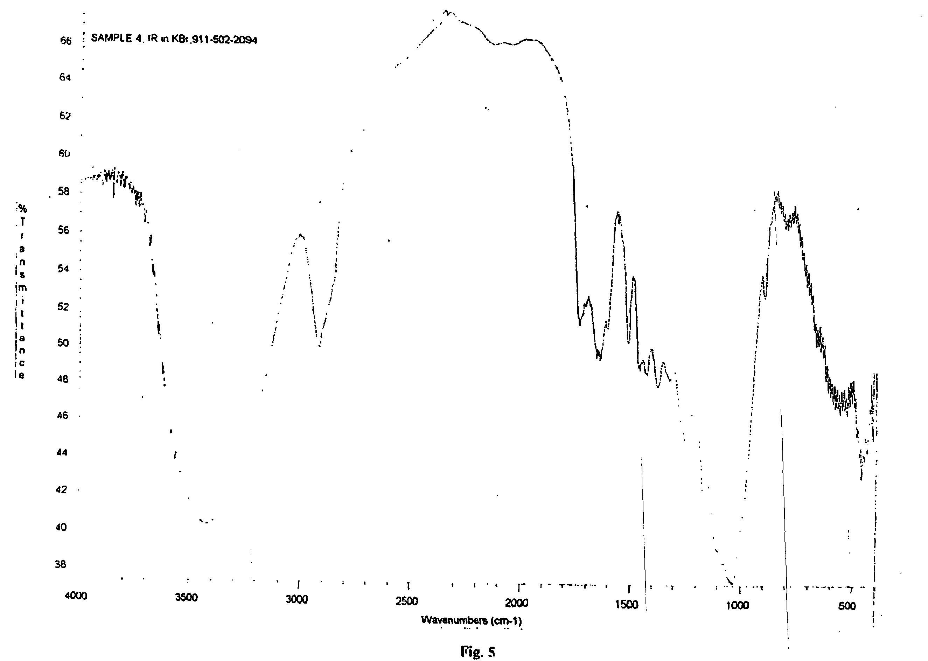

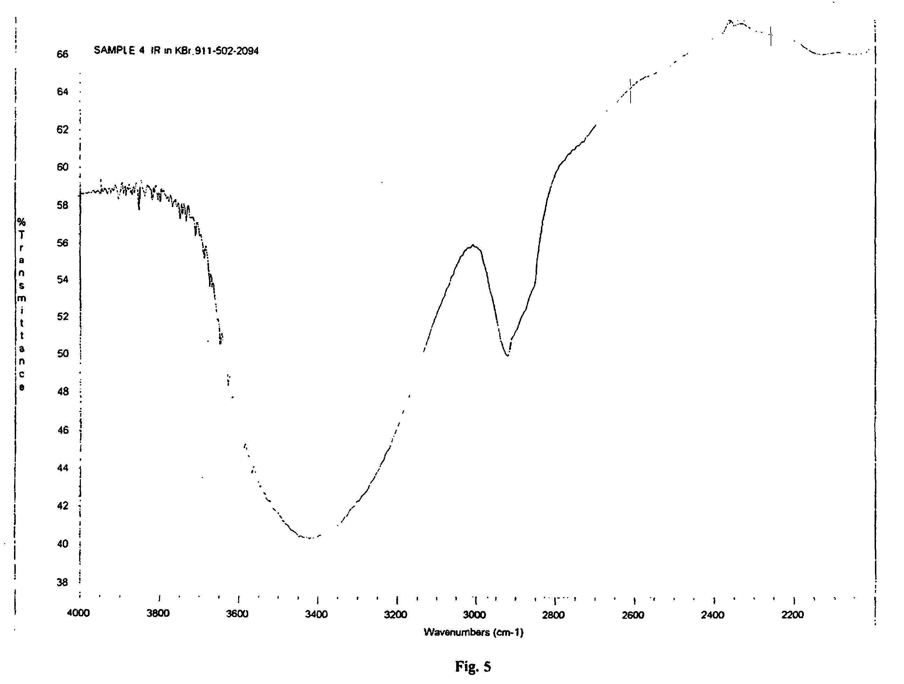

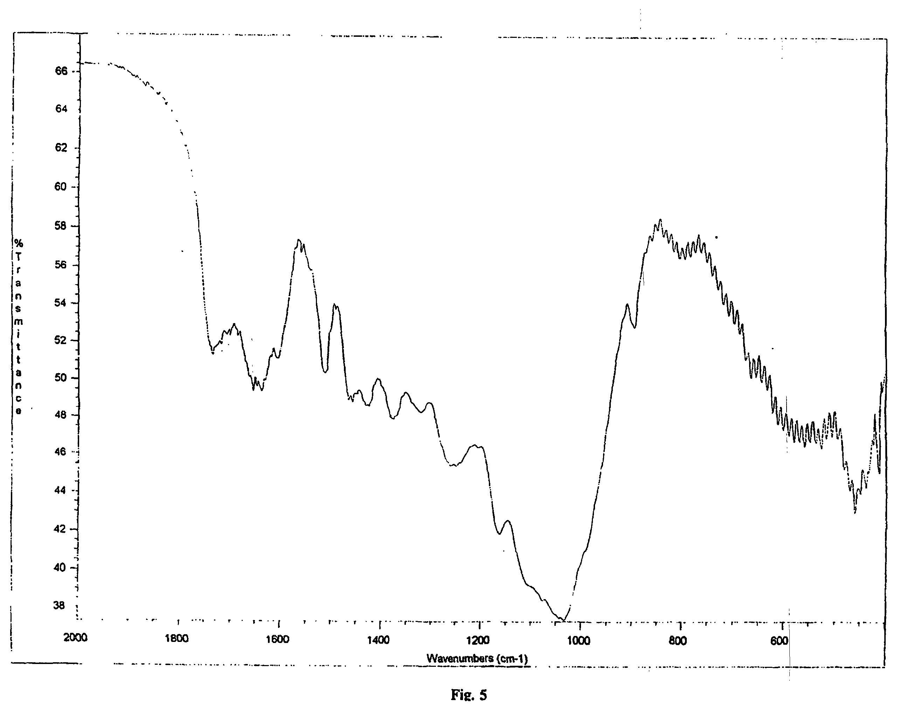

Figure 5 relates to IR Spectra of raw *Setaria italica* husk.

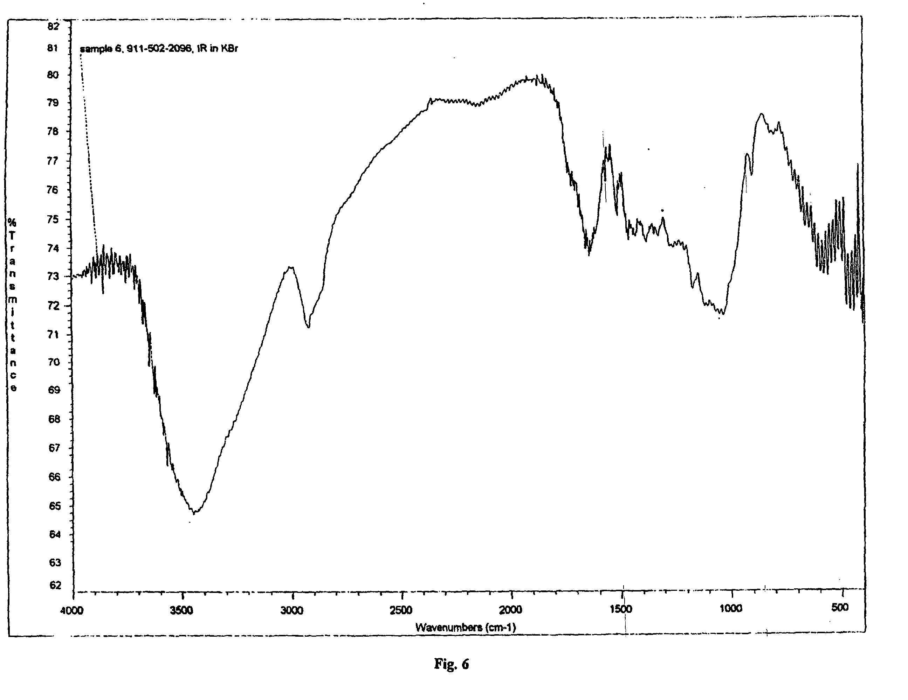

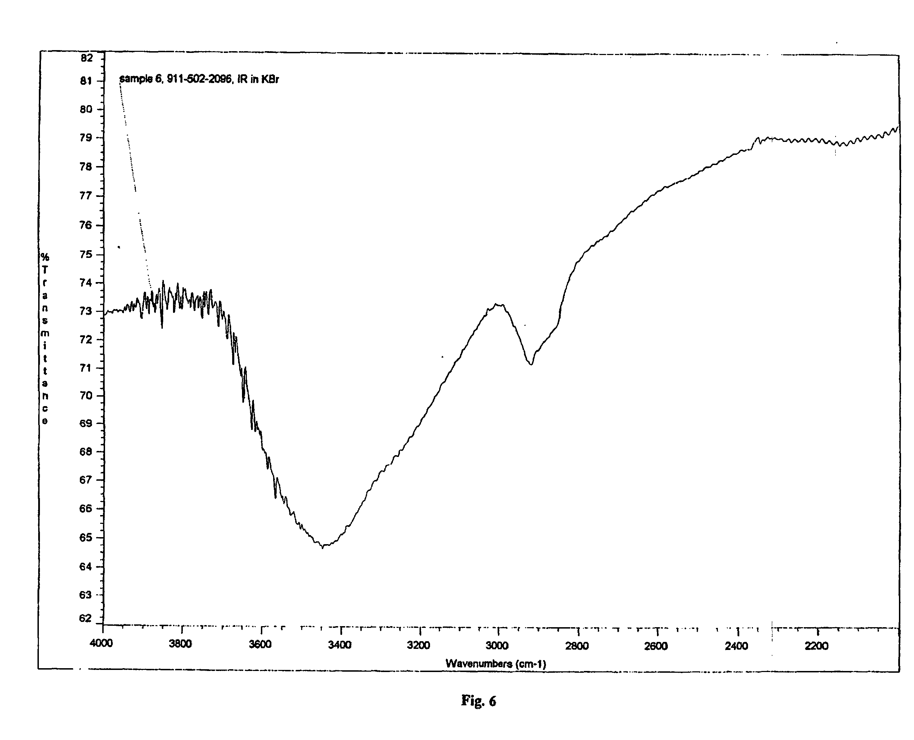

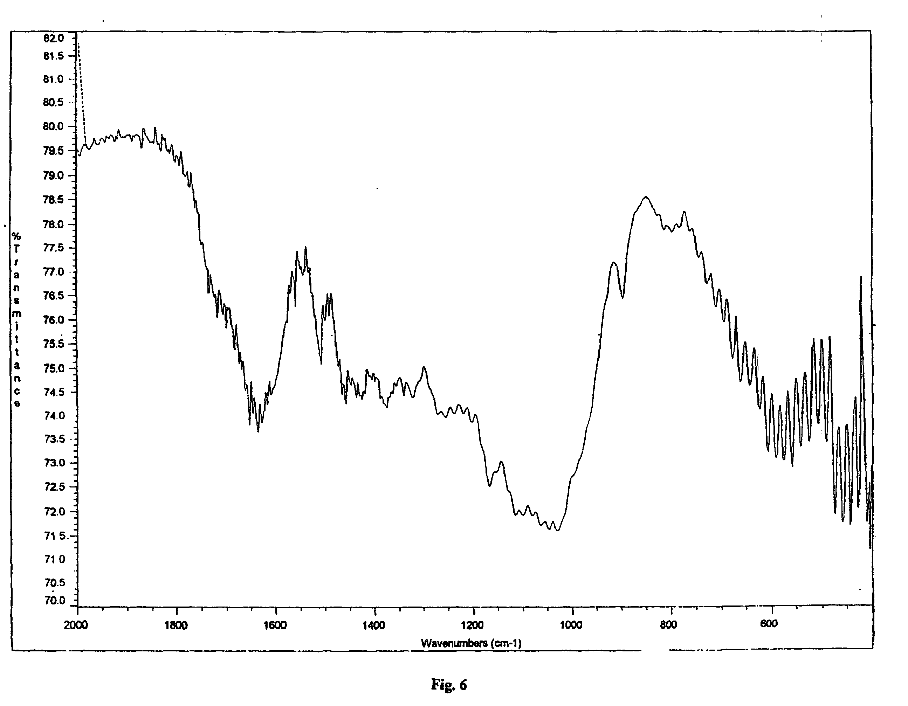

Figure 6 relates to IR Spectra of alkaline hydrogen peroxide treated *Setaria italica* husk.

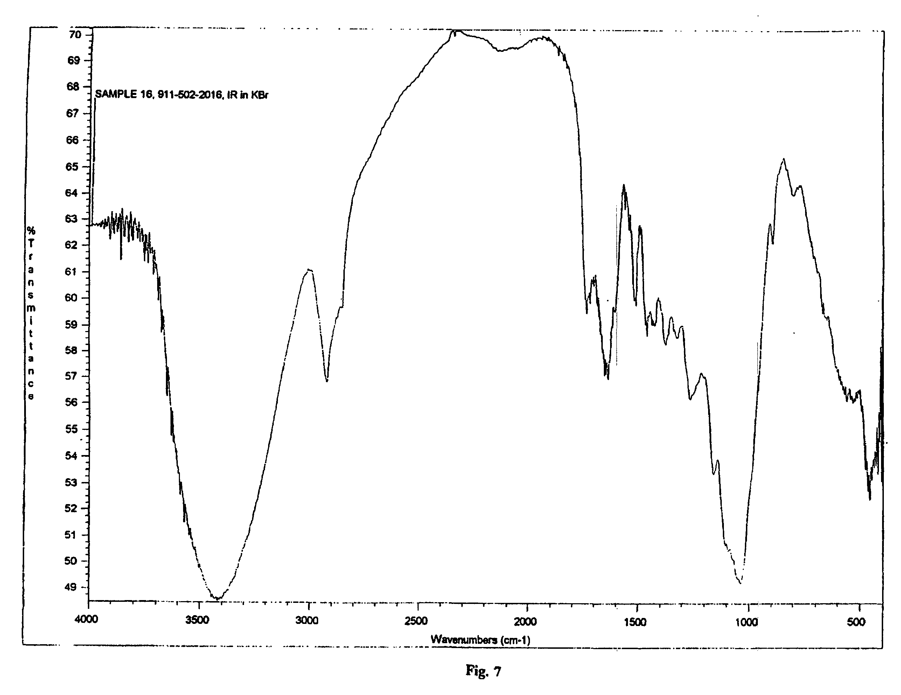

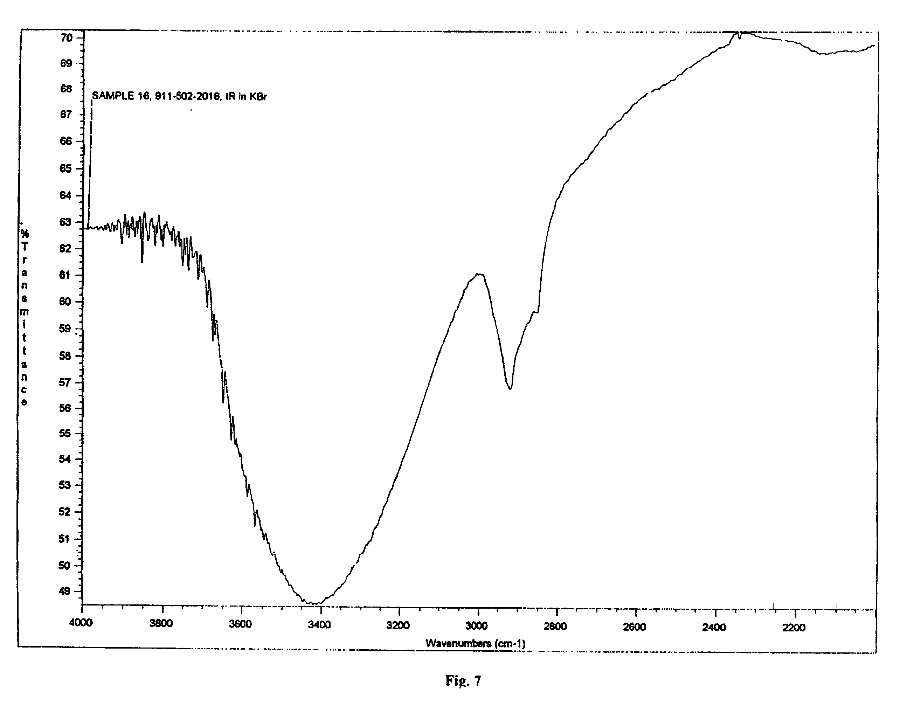

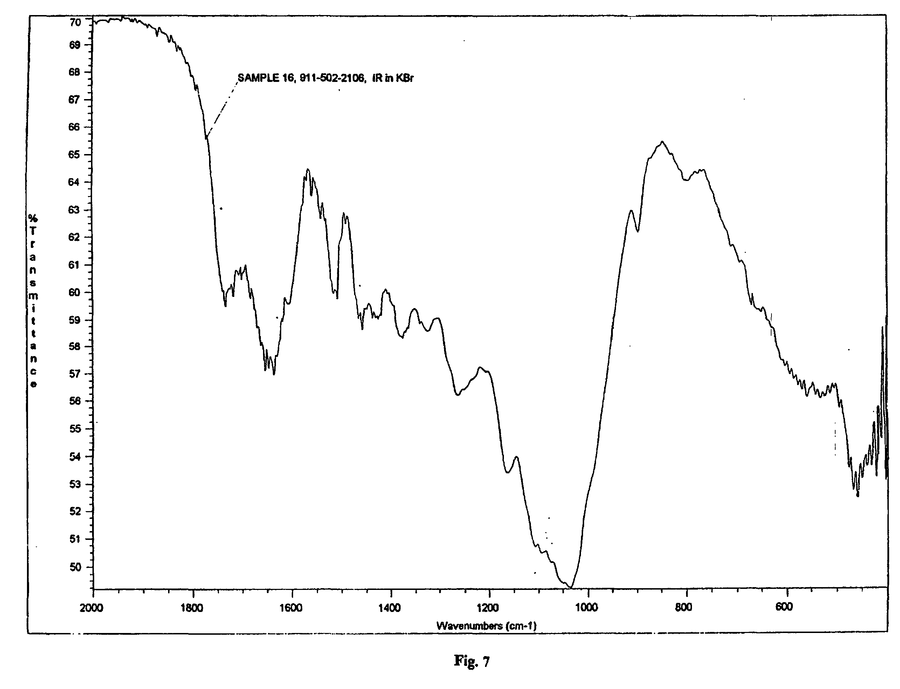

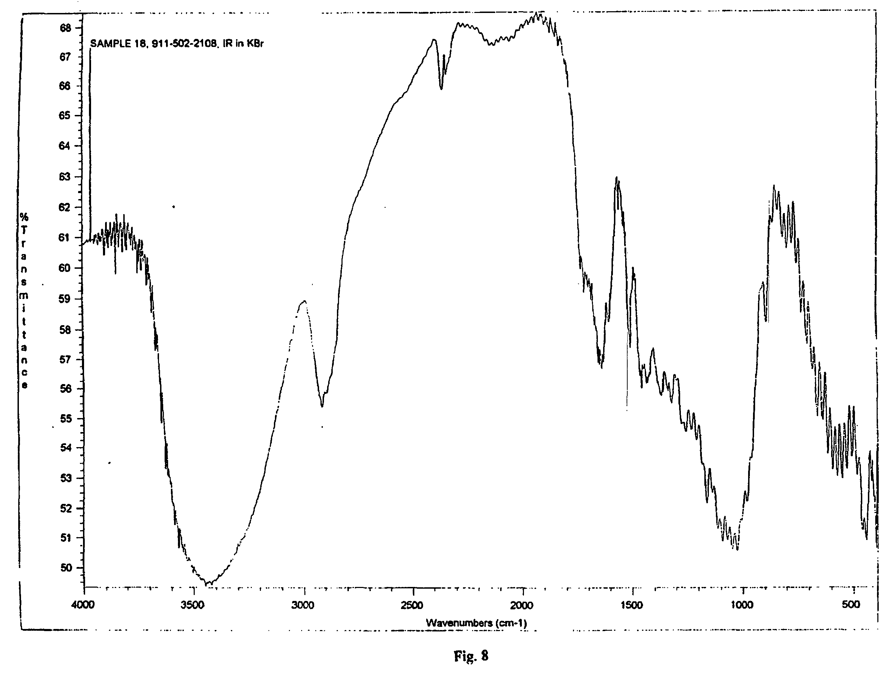

Figure 7 relates to IR Spectra of raw *Setaria italica* husk treated with ferric chloride.

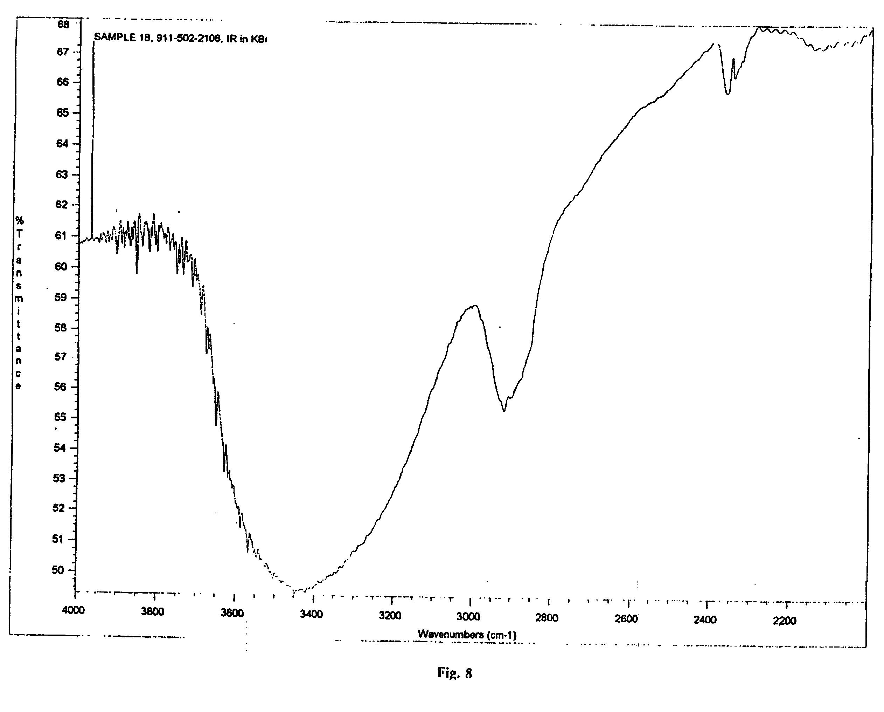

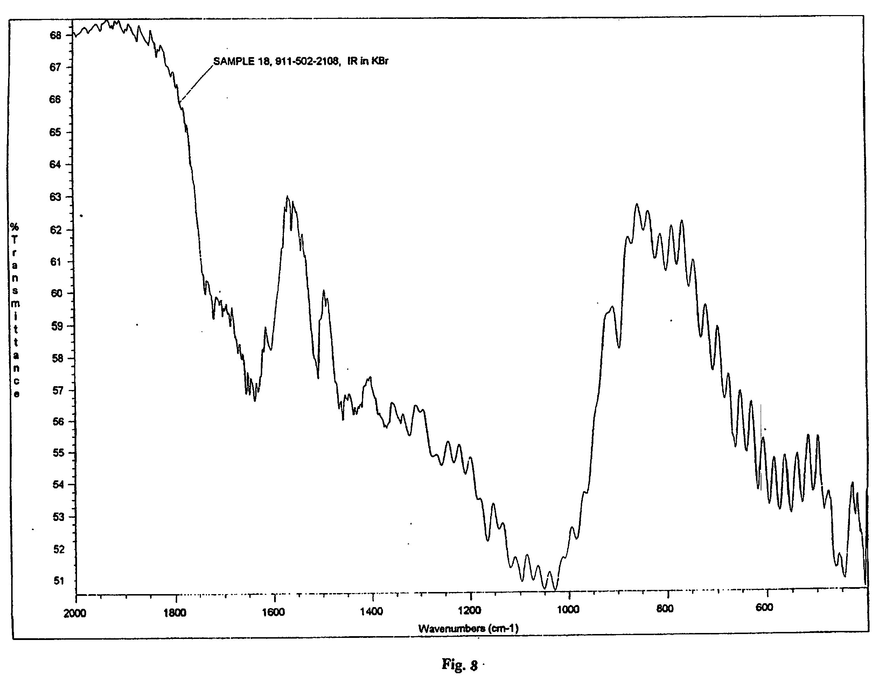

Figure 8 relates to IR Spectra of alkaline hydrogen peroxide treated *Setaria italica* husk which in turn treated with ferric chloride.
   As shown in the above IR Spectroscopy of figures 5 to 8, the more reactive organo-metallic bonds were formed with iron.

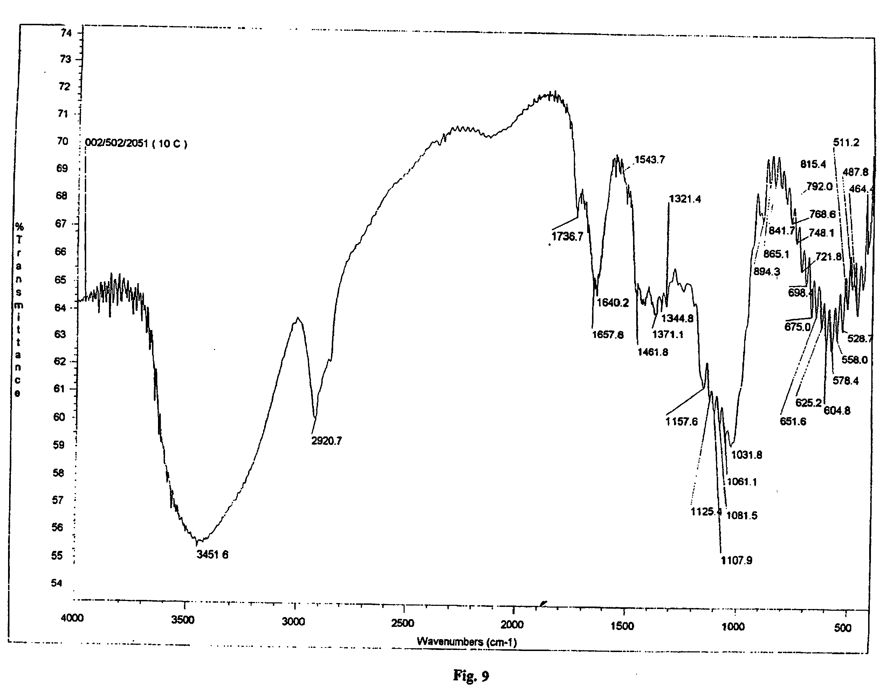

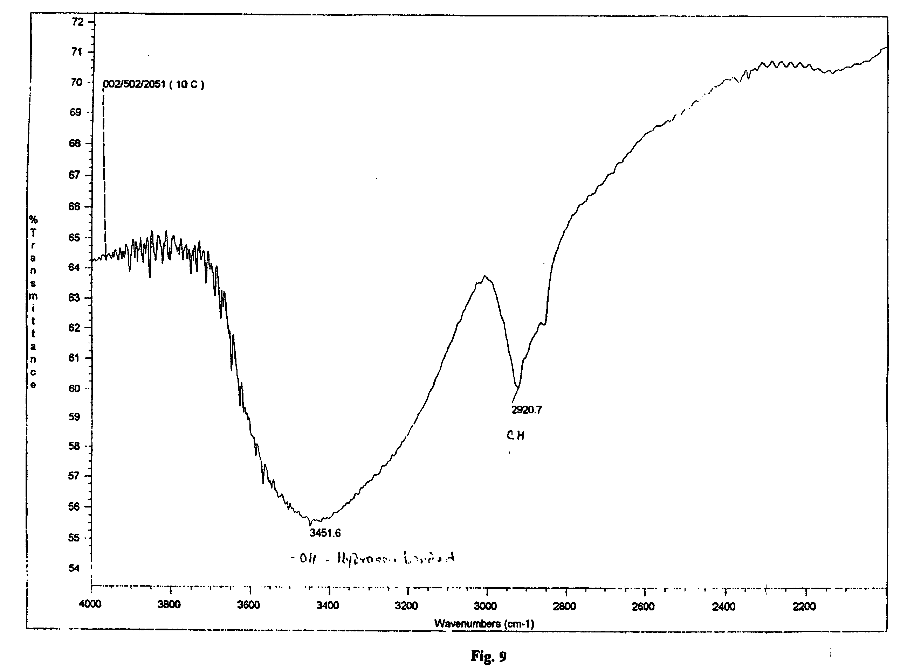

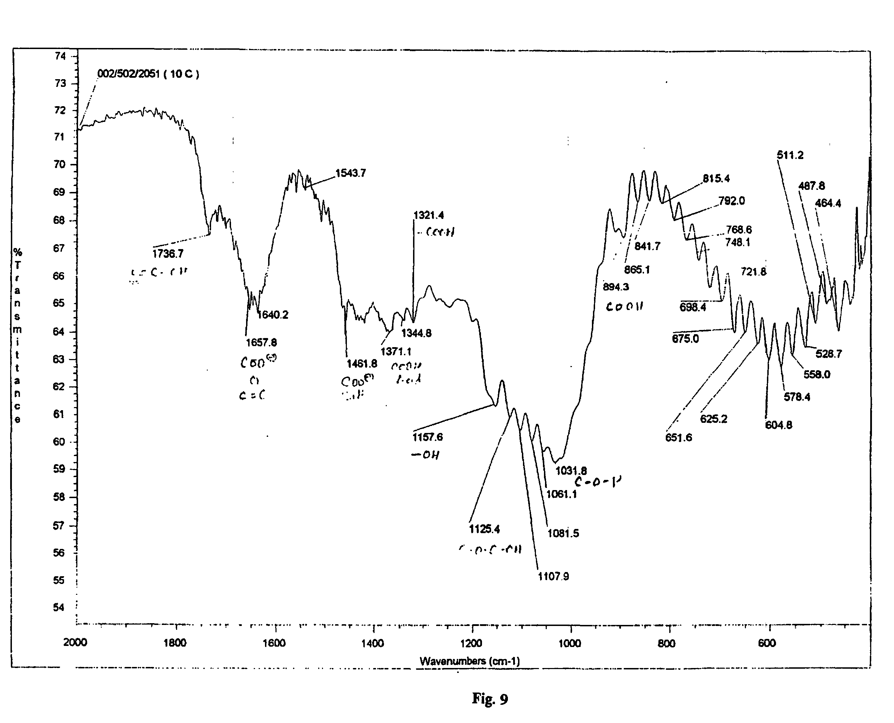

Figure 9 relates to IR Spectra of alkaline hydrogen peroxide treated wheat husk.

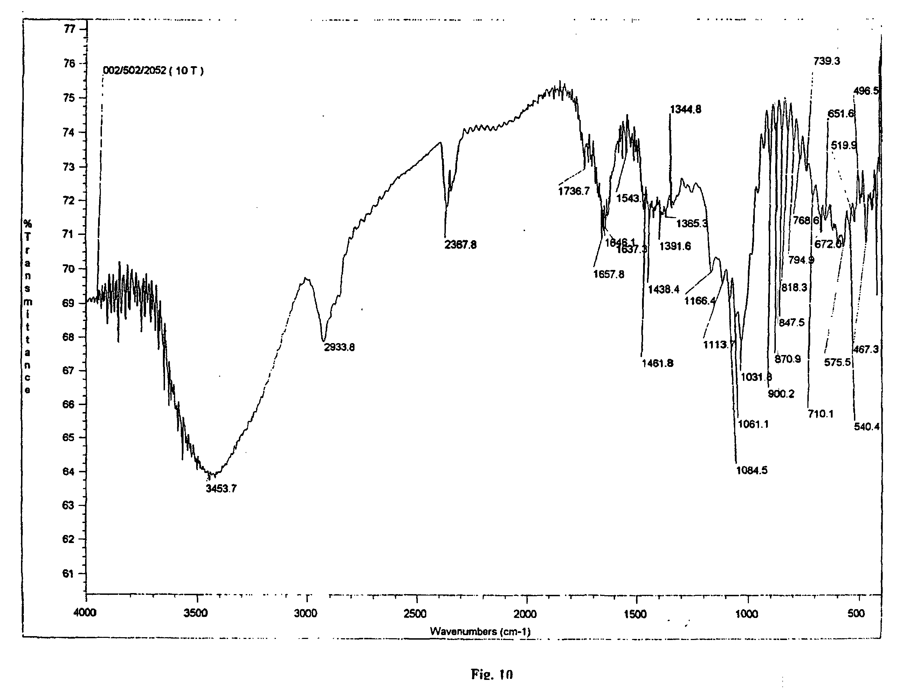

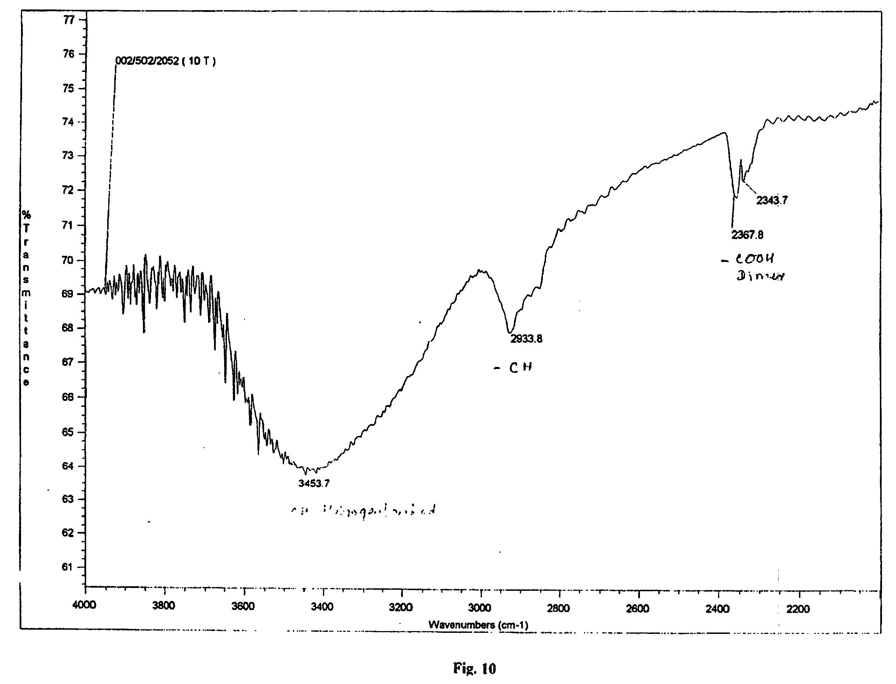

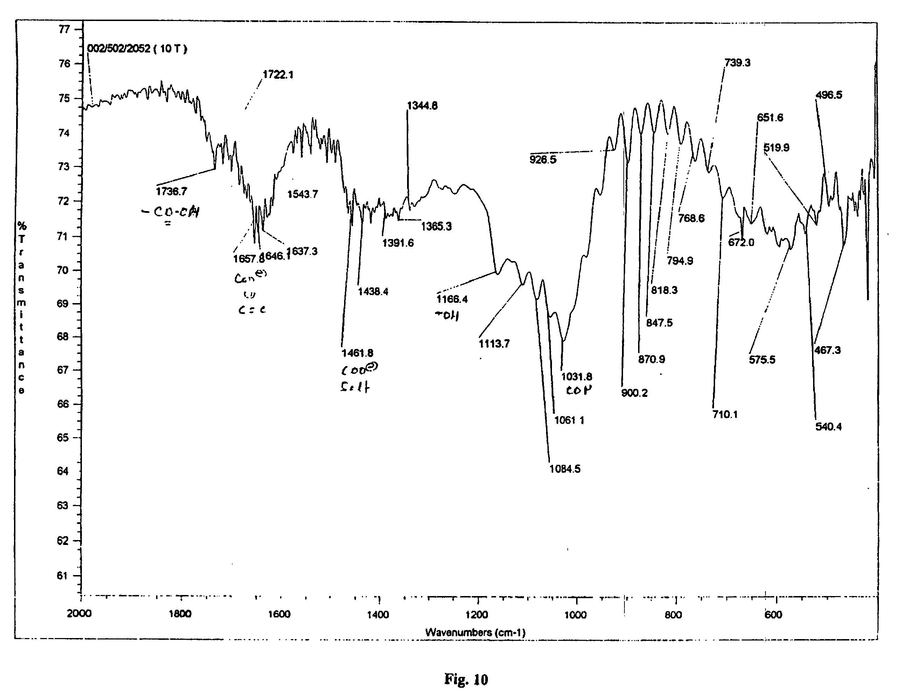

Figure 10 relates to IR Spectra of alkaline hydrogen peroxide treated wheat husk which in turn treated with ferric chloride.
   As shown in IR Spectroscopy of figures 9 and 10, alkaline hydrogen peroxide treated wheat (*Triticum sp.)* husk resulted in many organo-metallic bonds in particular significantly at 2360 ± 10 and 2340 ± 10 wavenumbers(cm-1)

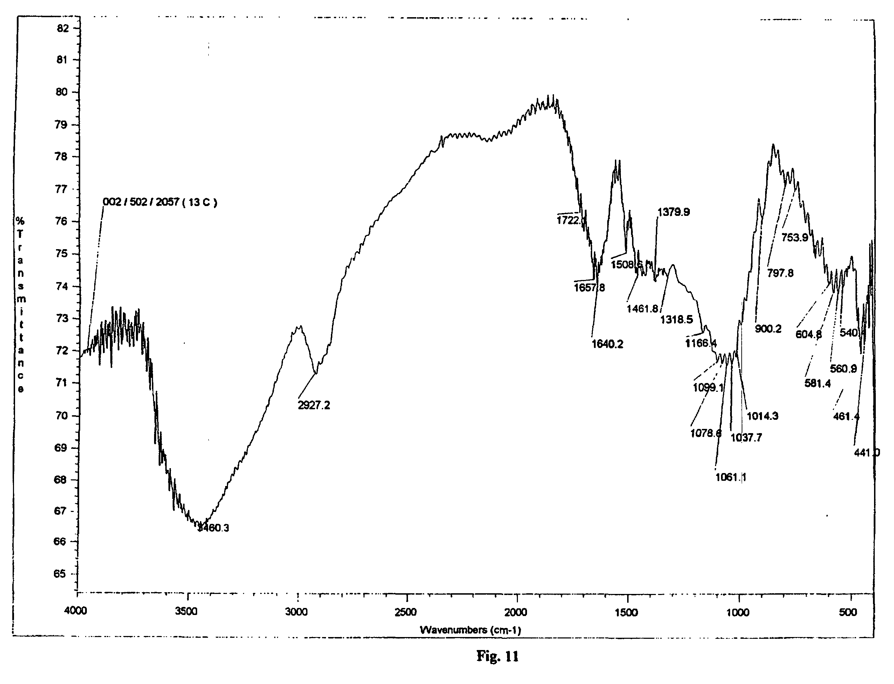

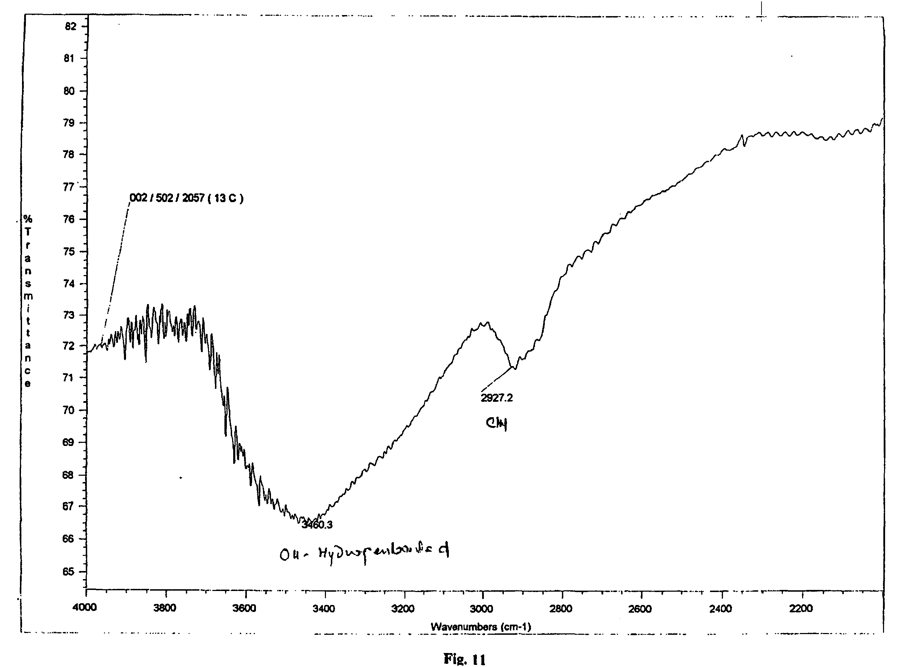

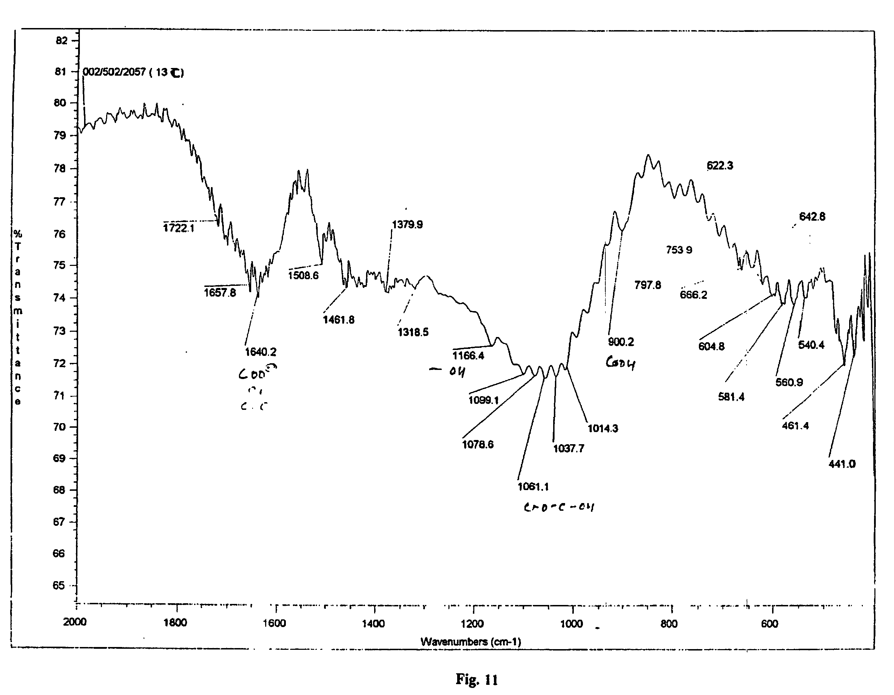

Figure 11 relates to IR Spectra of *Panicum miliaceum* husk.

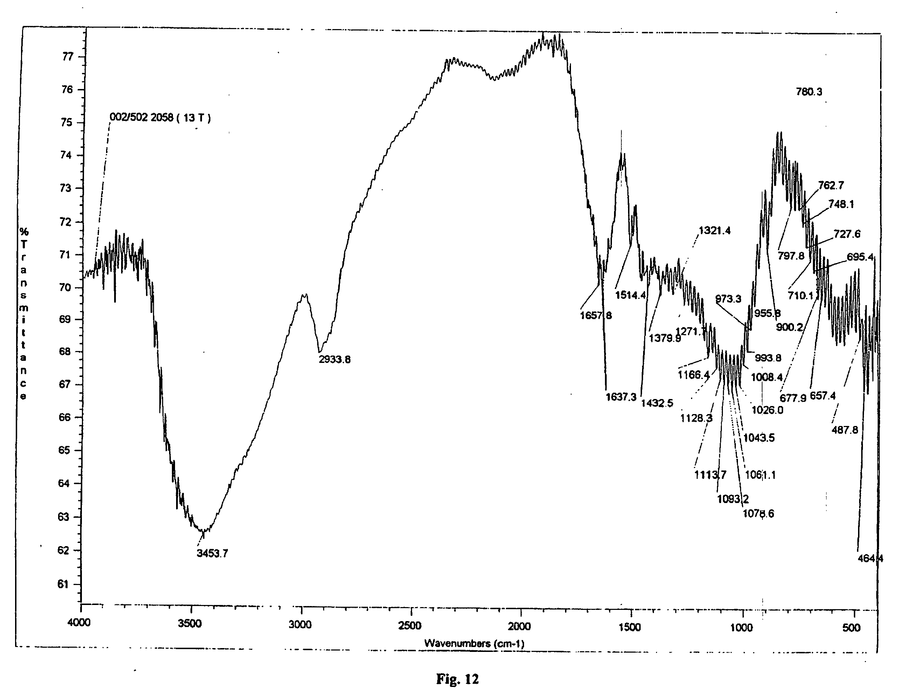

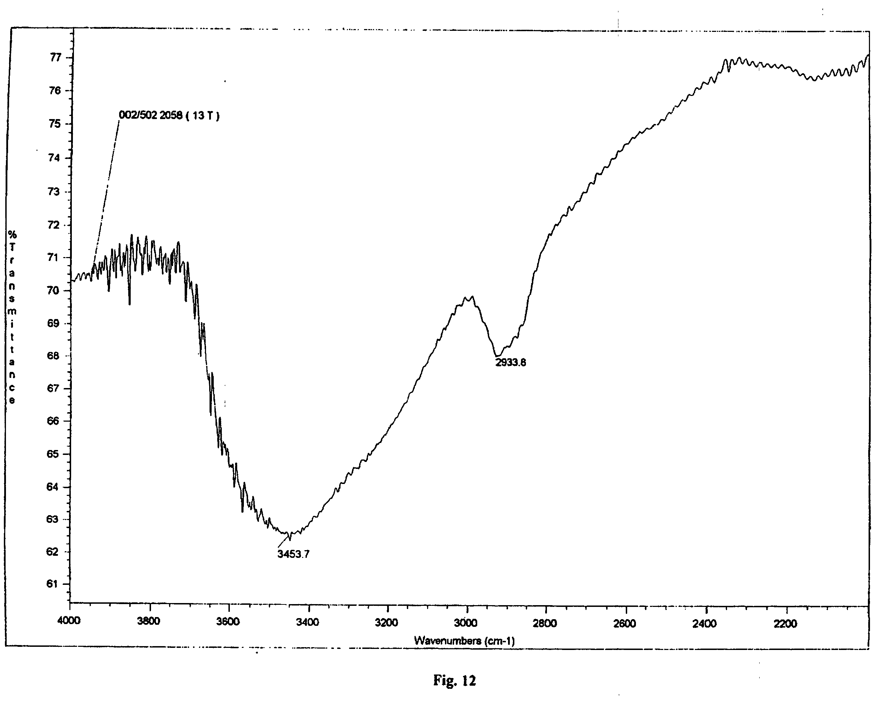

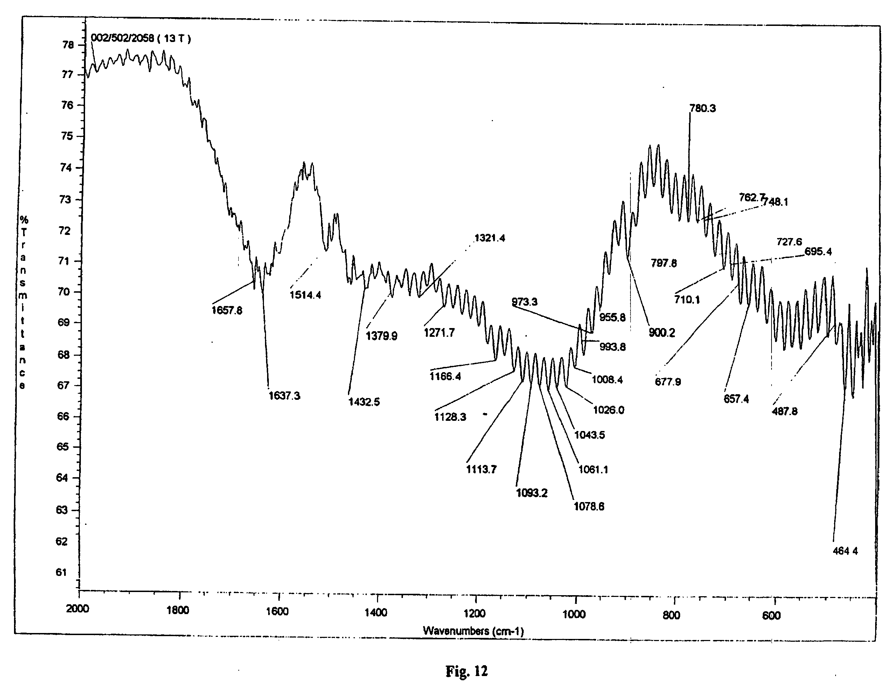

Figure 12 relates to IR Spectra of alkaline hydrogen peroxide treated *Panicum miliaceum* husk which in turn treated with ferric chloride.
   The IR Spectroscopy of figures 11 and 12 reveals that organo-metallic bonds were more predominant from 1600 to 600 wavenumbers (cm-1).

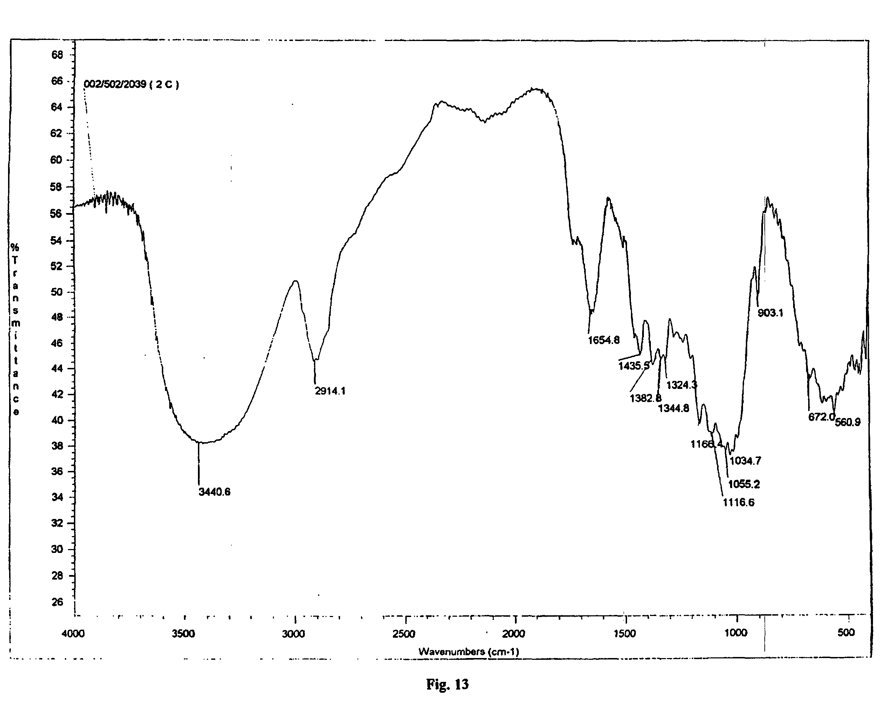

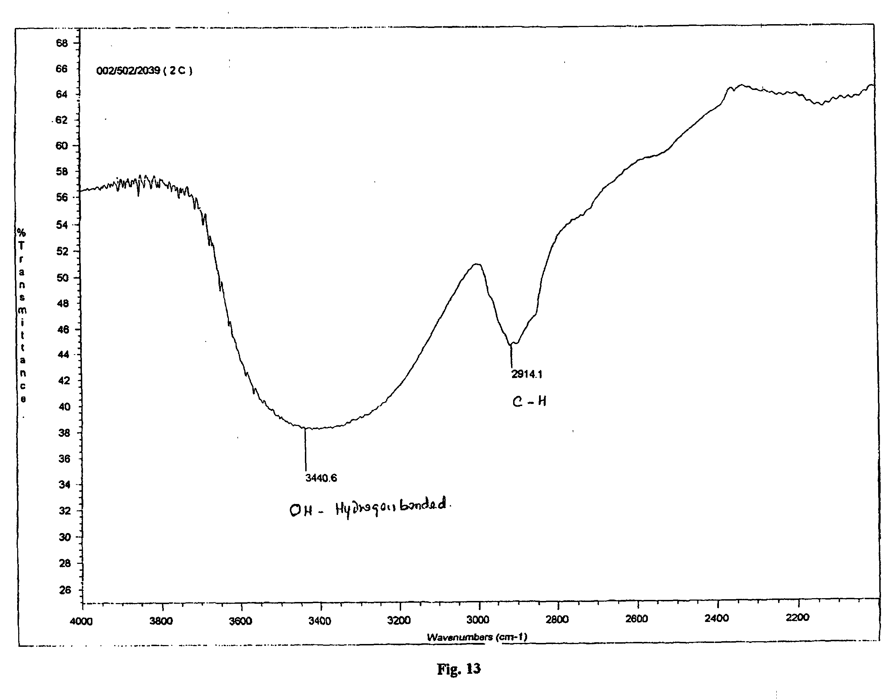

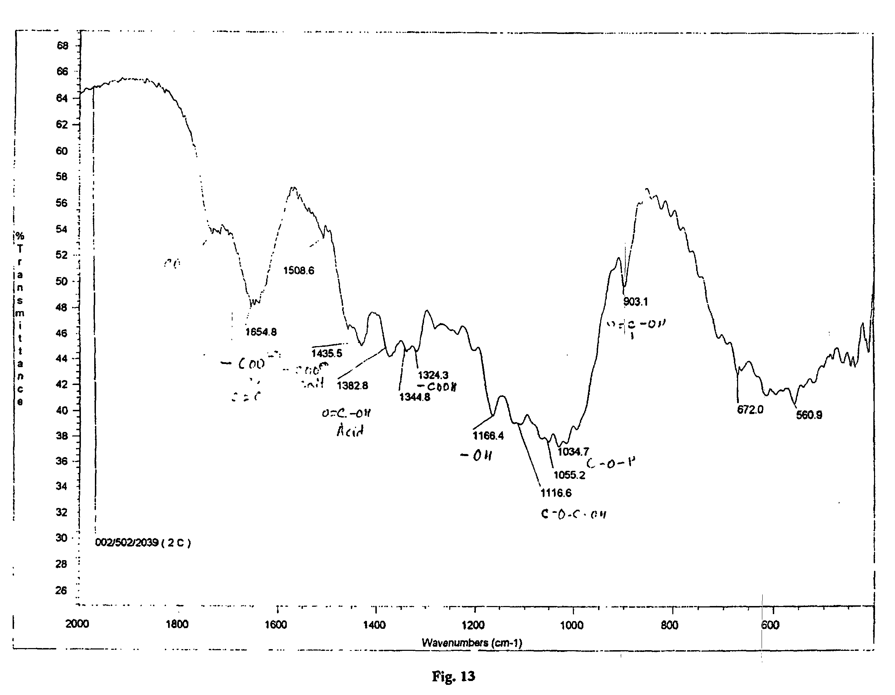

Figure 13 relates to IR Spectra of alkaline hydrogen peroxide treated cotton seed (*Gossypium sp.)* hulls.

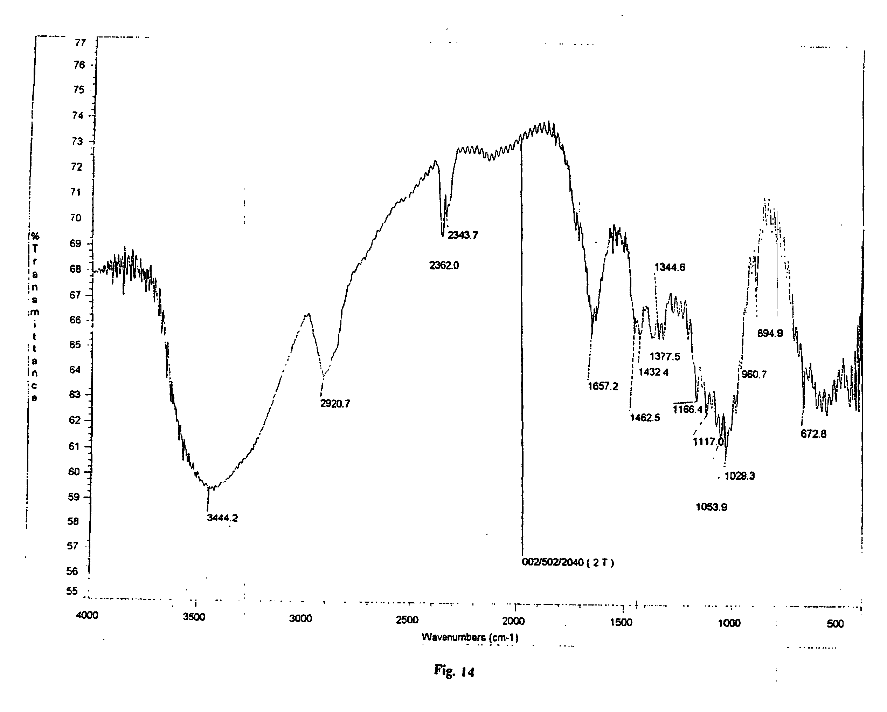

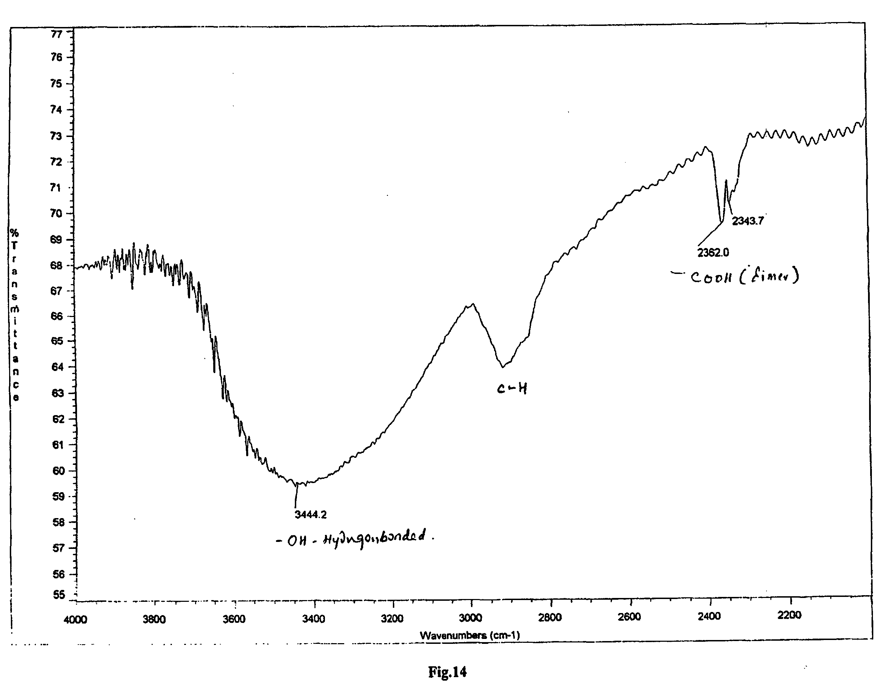

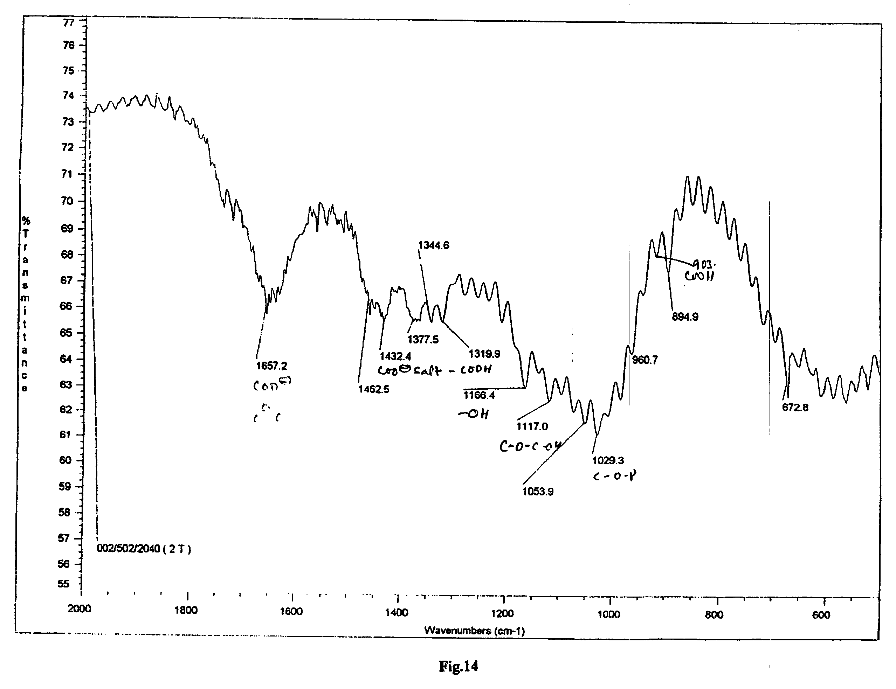

Figure 14 relates to IR Spectra of alkaline hydrogen peroxide treated cotton seed (*Gossypium sp.)* hulls which in turn treated with ferric chloride.
   As shown in IR Spectroscopy of figures 13 and 14, alkaline hydrogen peroxide treated cotton seed (*Gossypium sp.*) hulls resulted in many organo-metallic bonds in particular significantly at 2360 ± 10 and 2340 ± 10 wavenumbers(cm-1)

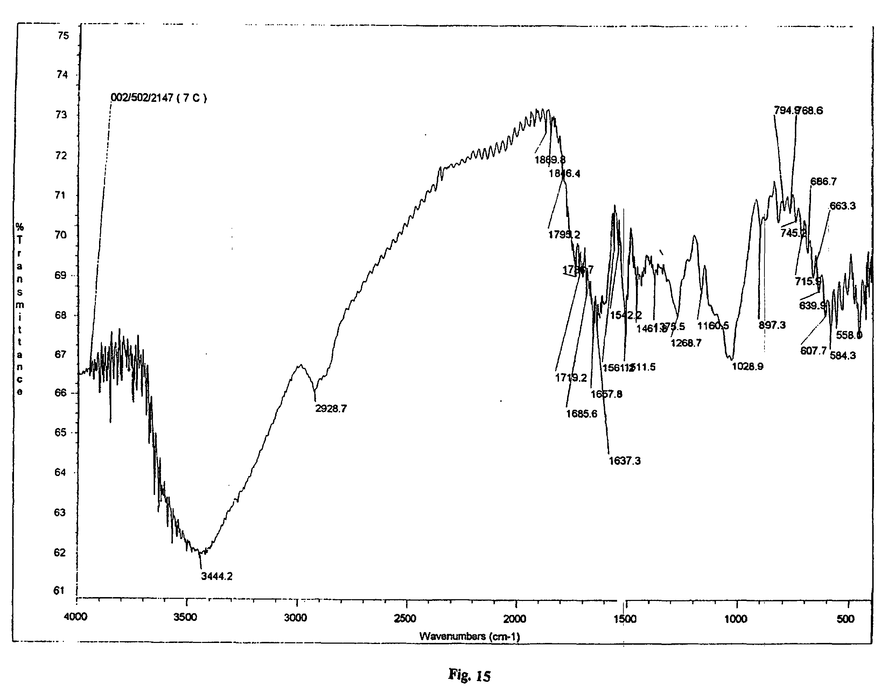

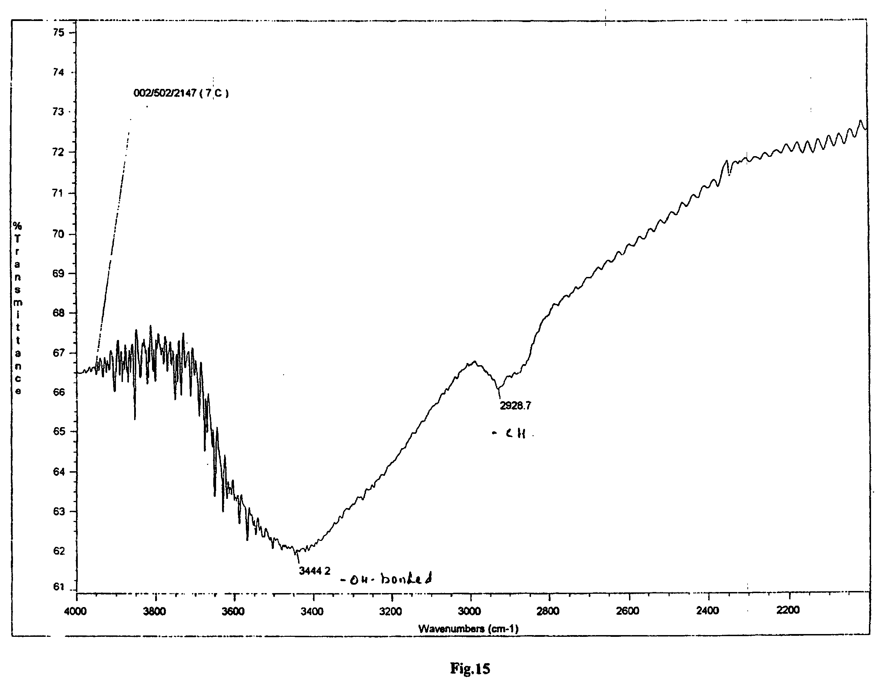

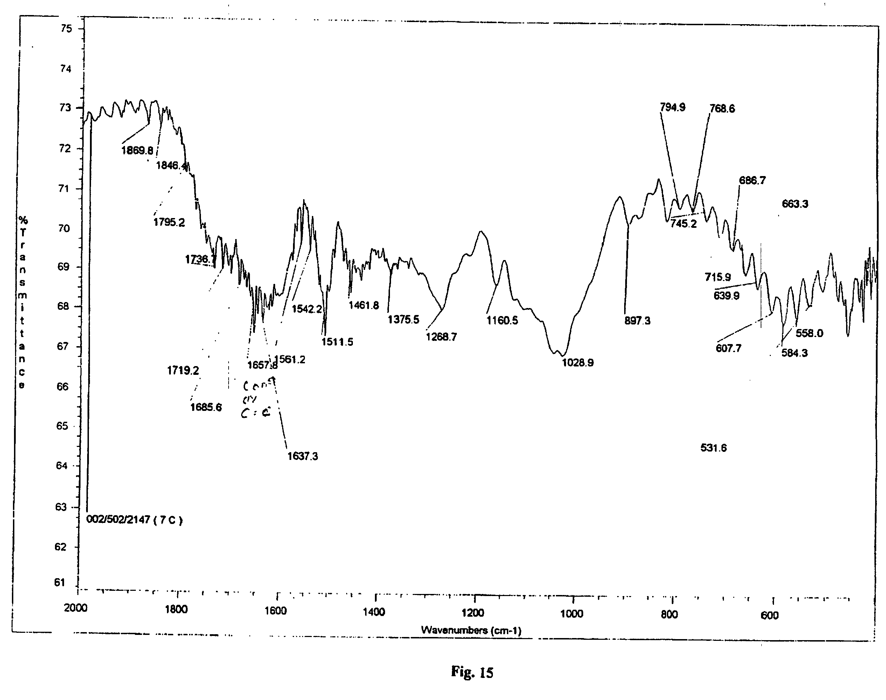

Figure 15 relates to IR Spectra of alkaline hydrogen peroxide treated castor (*Ricinus communis)* seed coats.

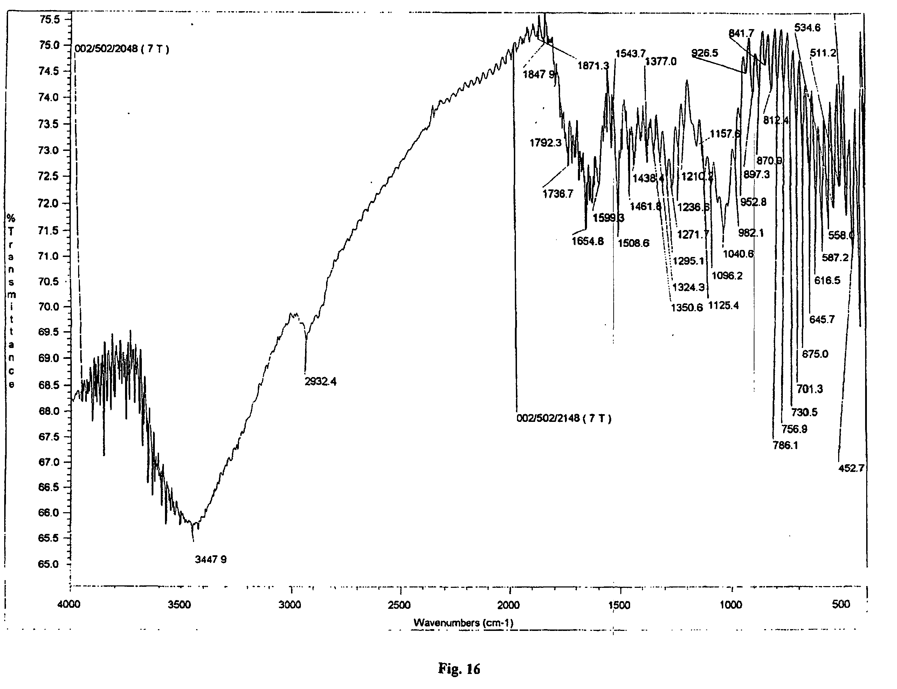

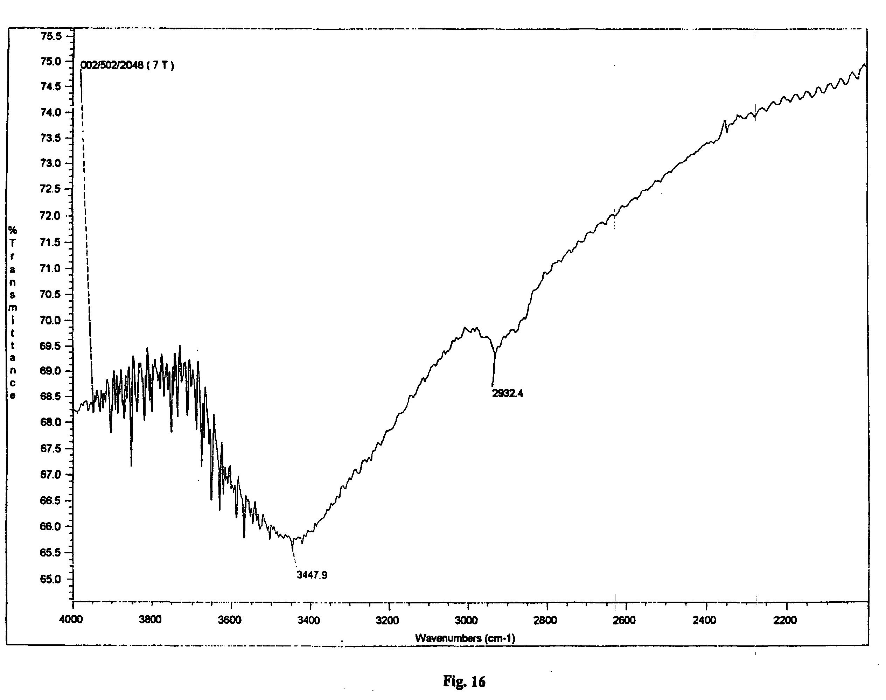

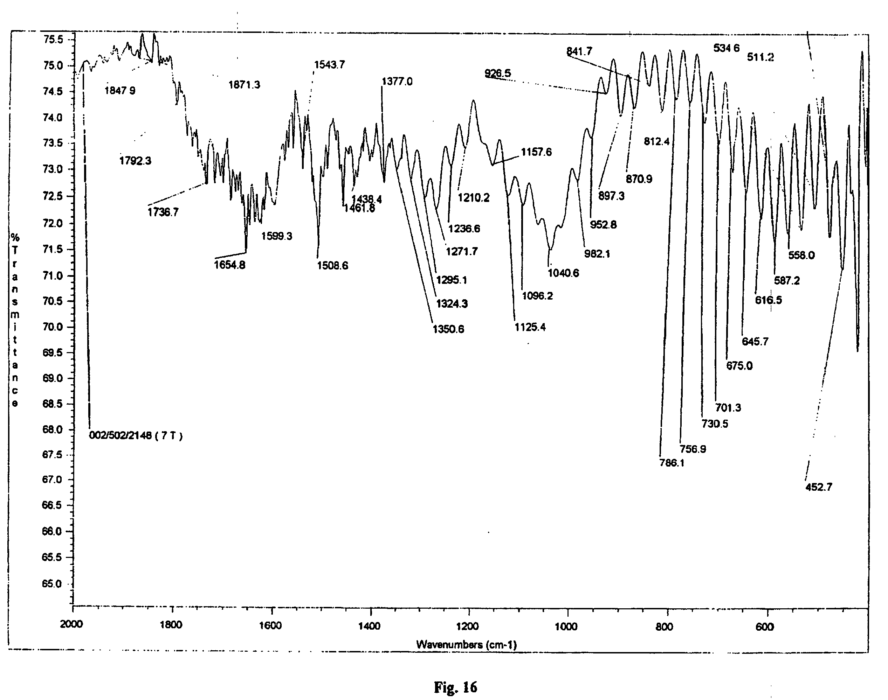

Figure 16 relates to IR Spectra of alkaline hydrogen peroxide treated castor (*Ricinus communis)* seed coats which in turn treated with ferric chloride
   As shown in IR Spectroscopy of figures 15 and 16, alkaline hydrogen peroxide treated castor seed coats (*Ricinus communis)* resulted in many organo-metallic bonds.

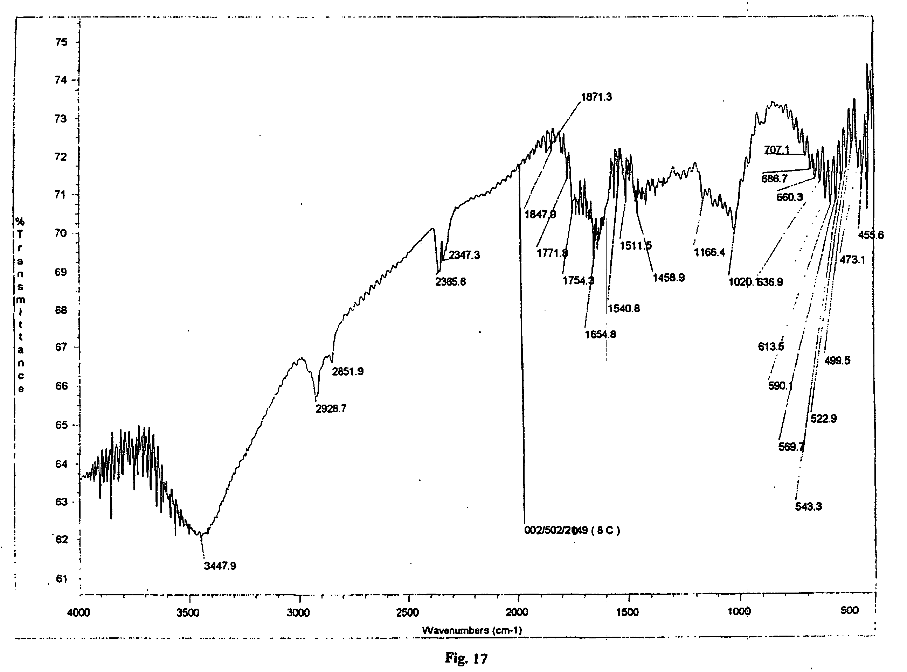

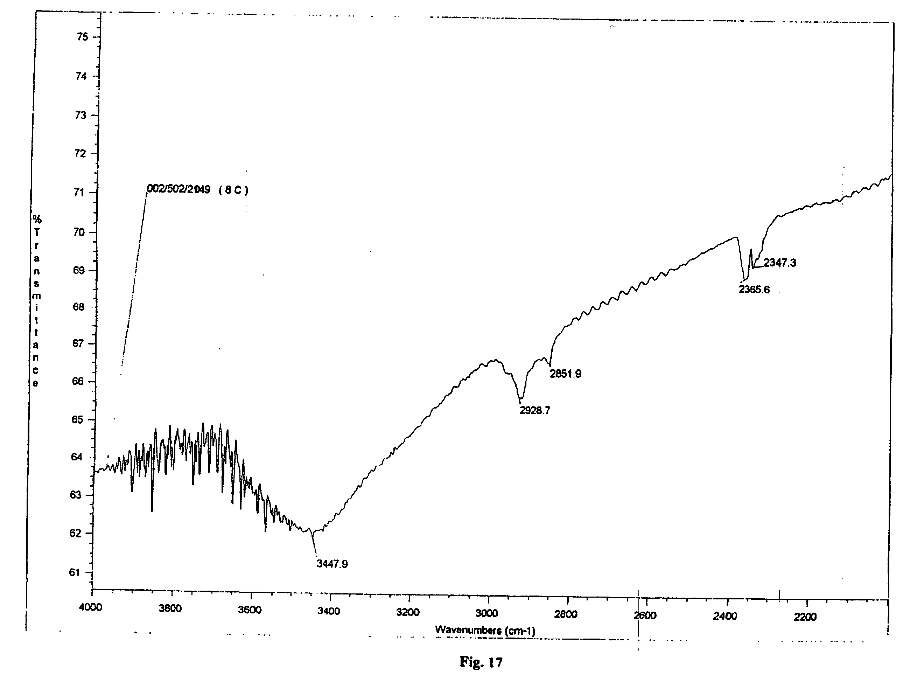

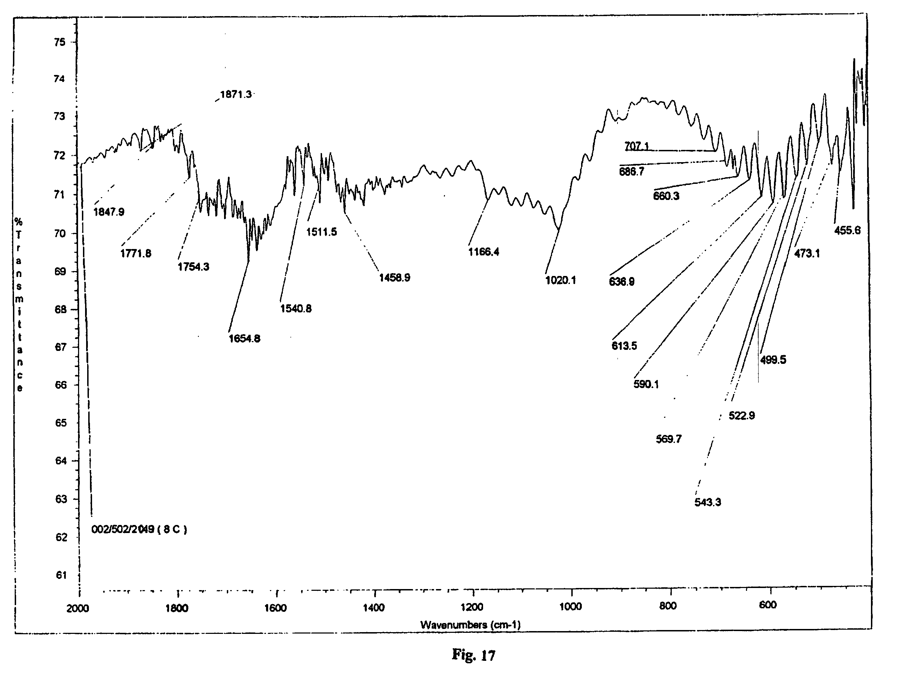

Figure 17 relates to IR Spectra of alkaline hydrogen peroxide treated sunflower (*Helianthus annus)* seed coats.

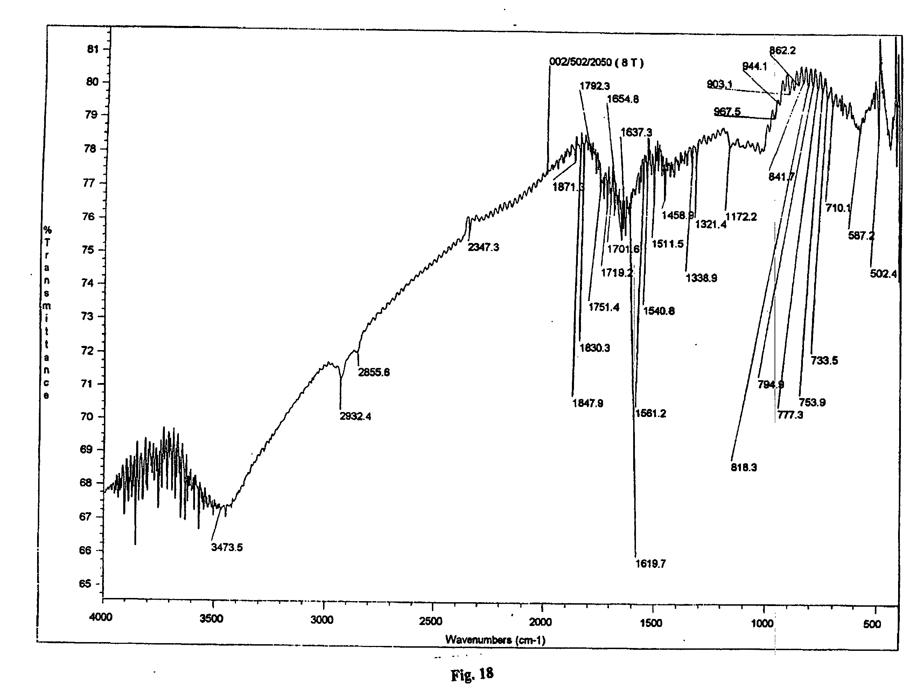

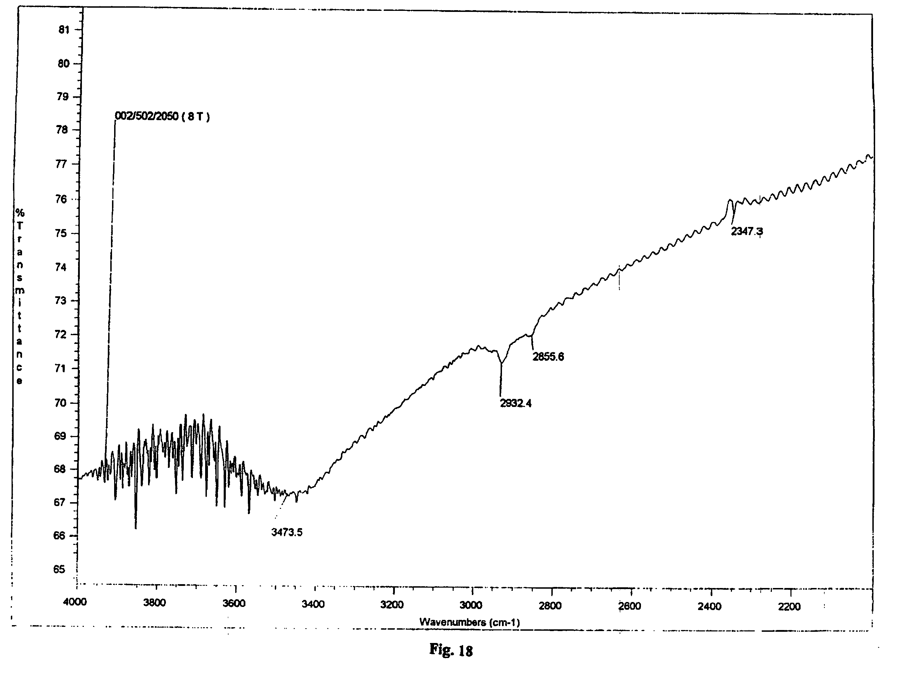

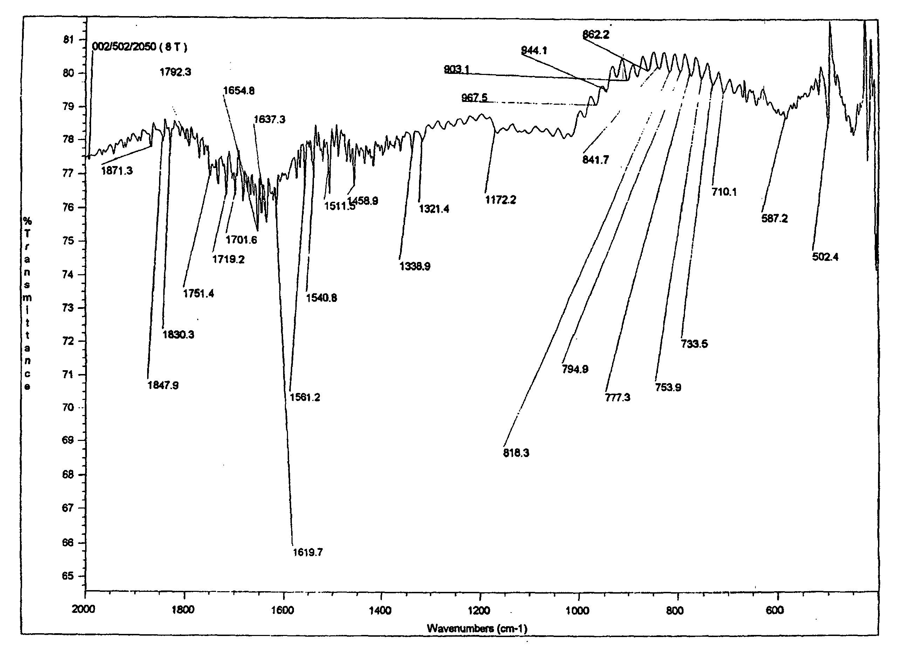

Figure 18 relates to IR Spectra of alkaline hydrogen peroxide treated sunflower (*Helianthus annus)* seed coats which in turn treated with ferric chloride.
   As shown in IR Spectroscopy of figures 17 and 18, alkaline hydrogen peroxide treated sunflower seed coats (*Helianthus annus)* resulted in many organo-metallic bonds.

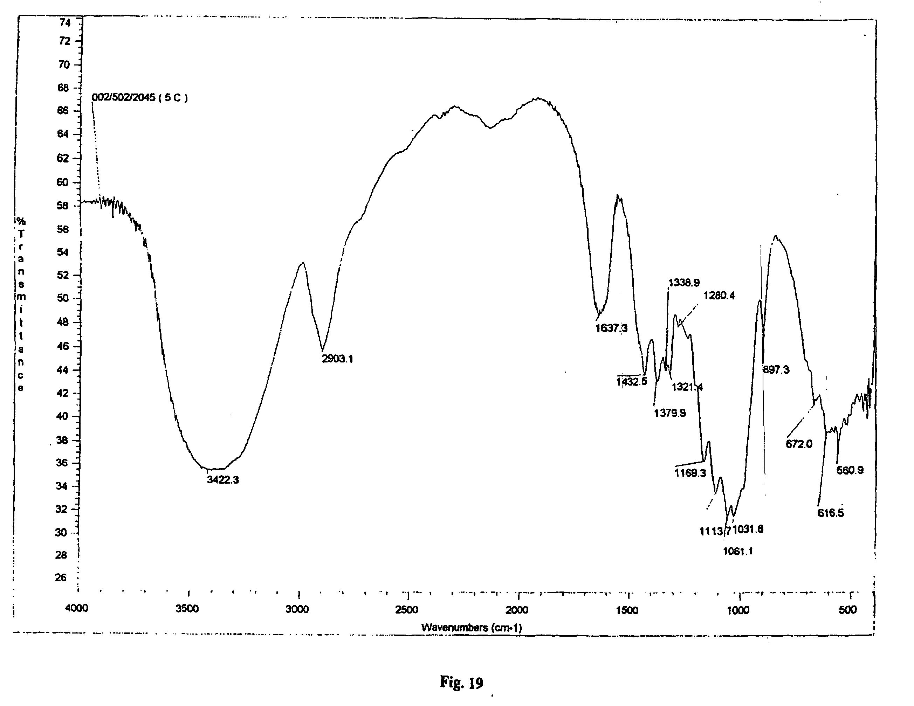

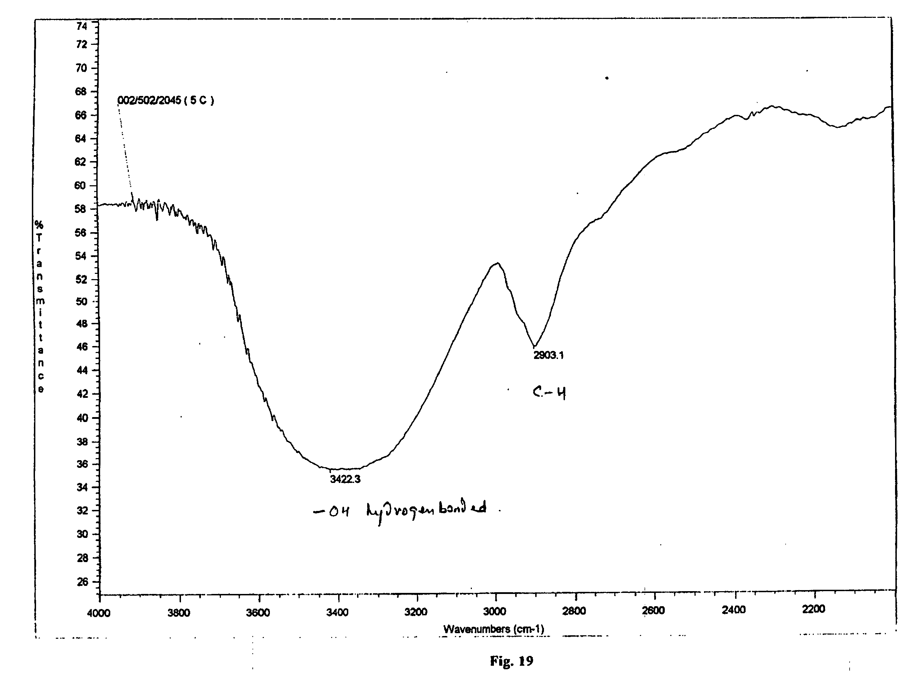

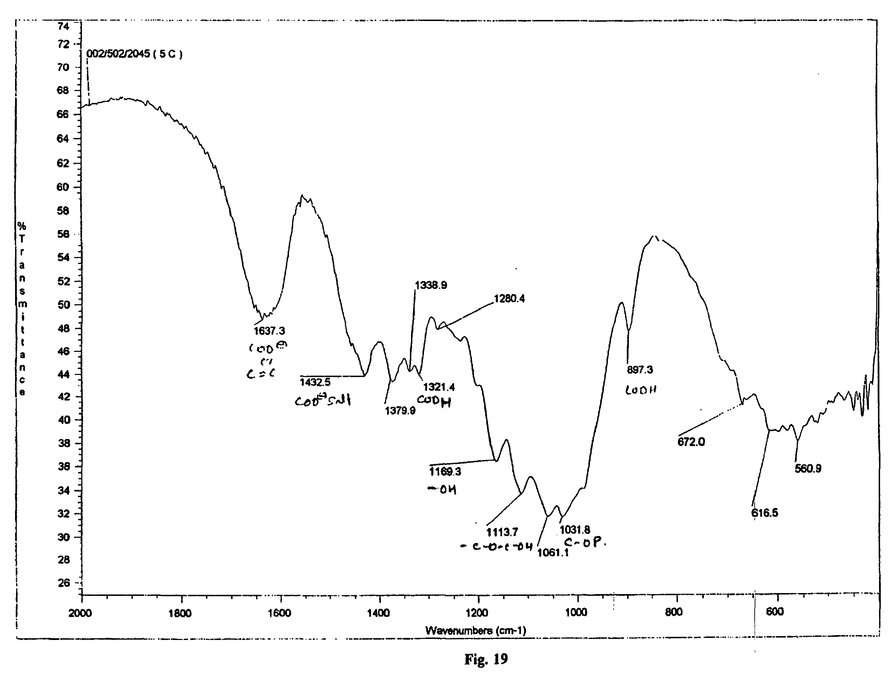

Figure 19 relates to IR Spectra of alkaline hydrogen peroxide treated redgram (*Cajanus cajan)* seed coats.

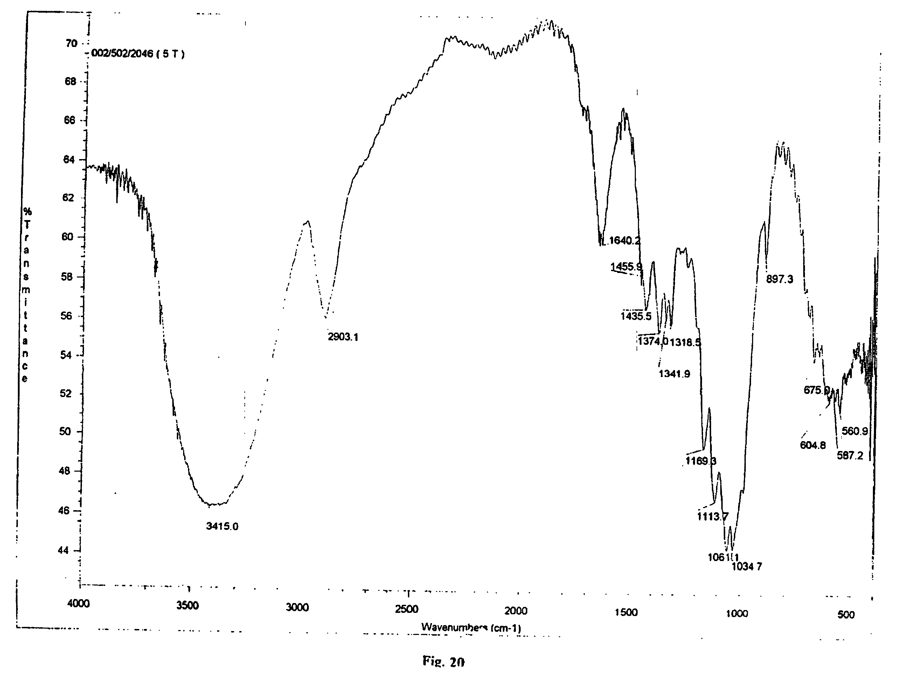

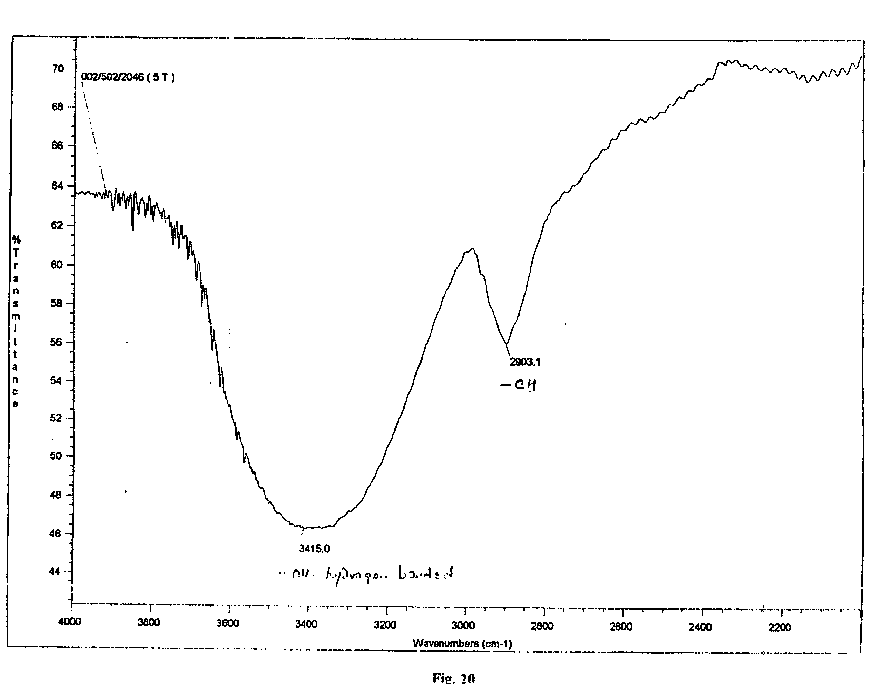

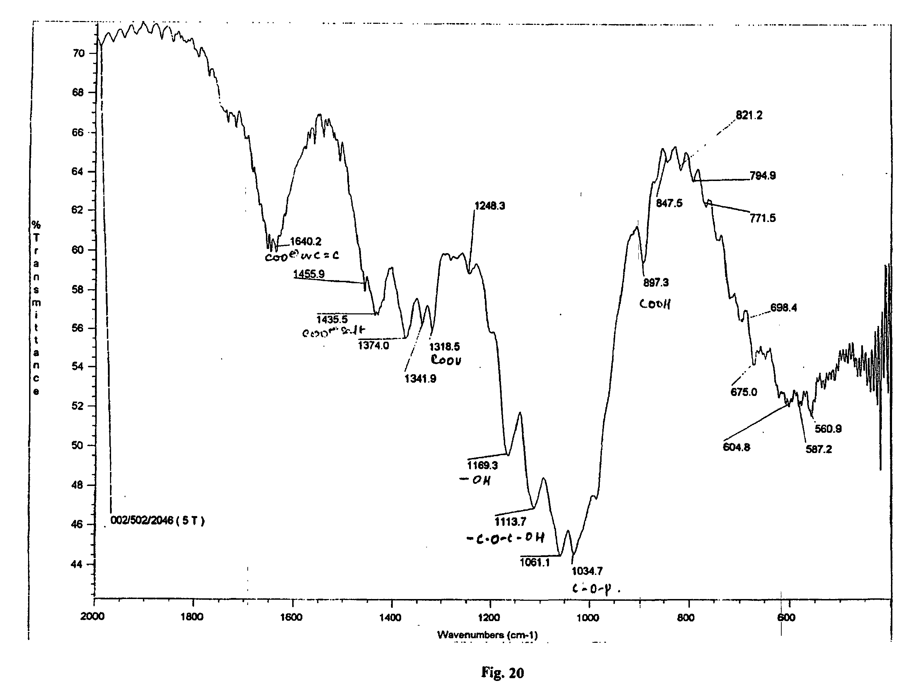

Figure 20 relates to IR Spectra of alkaline hydrogen peroxide treated redgram (*Cajanus cajan)* seed coats which in turn treated with ferric chloride
   As shown in IR Spectroscopy of figures 19 and 20, alkaline hydrogen peroxide treated redgram seed coats (*Cajanus cajan)* resulted in many organo-metallic bonds.

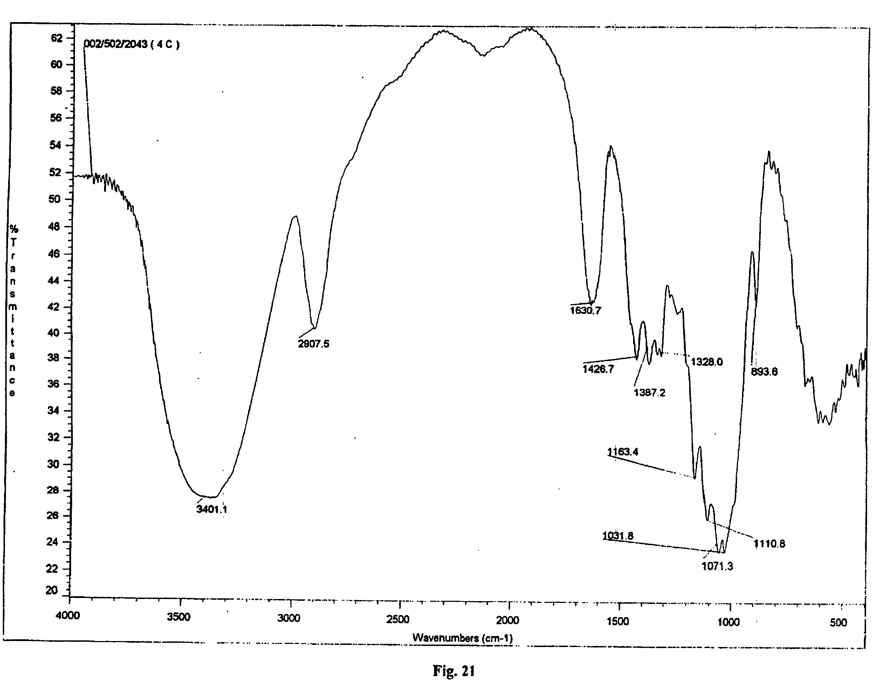

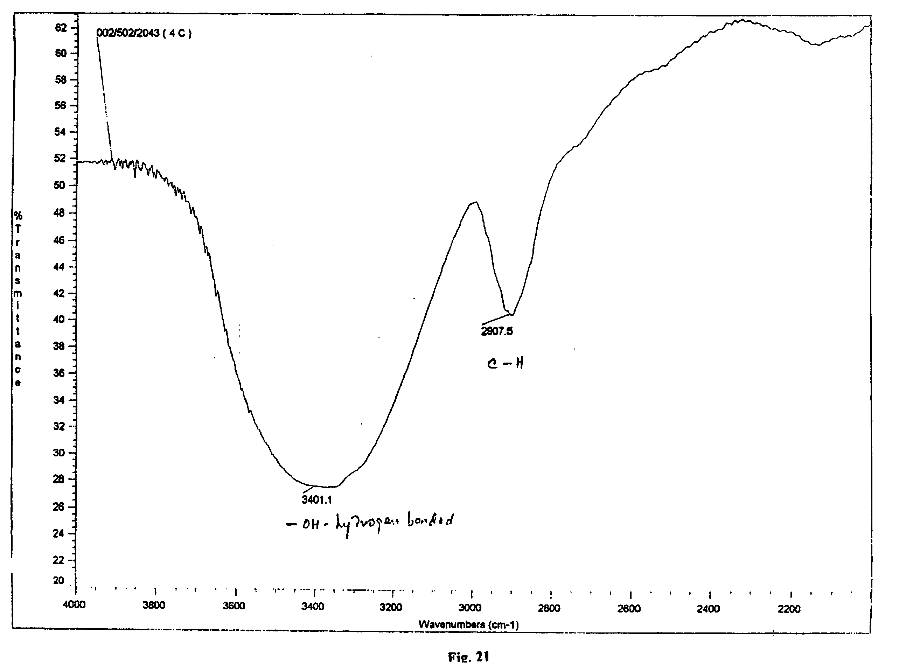

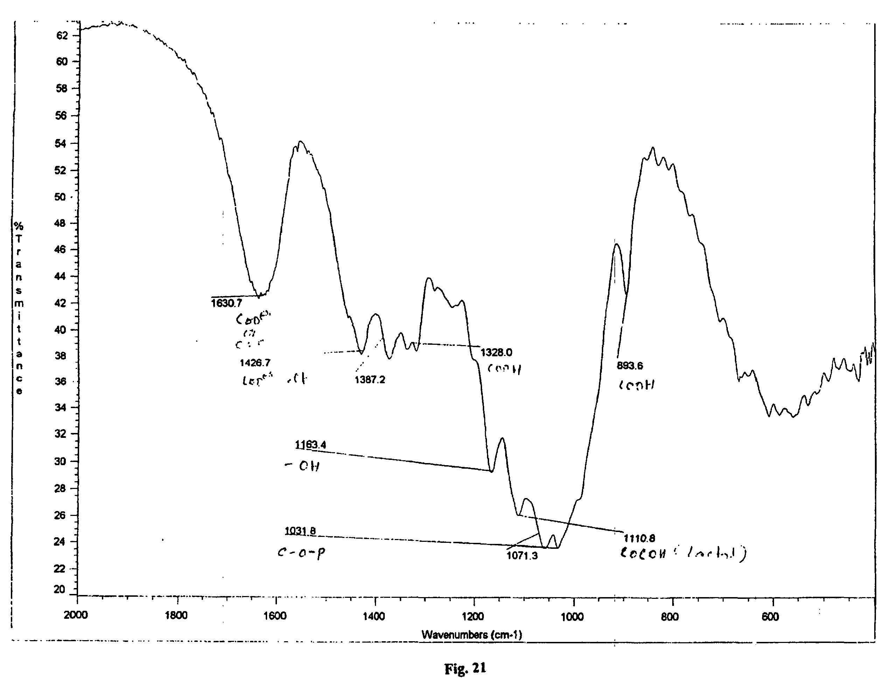

Figure 21 relates to IR Spectra of alkaline hydrogen peroxide treated greengram (*Vigna radiata)* seed coats.

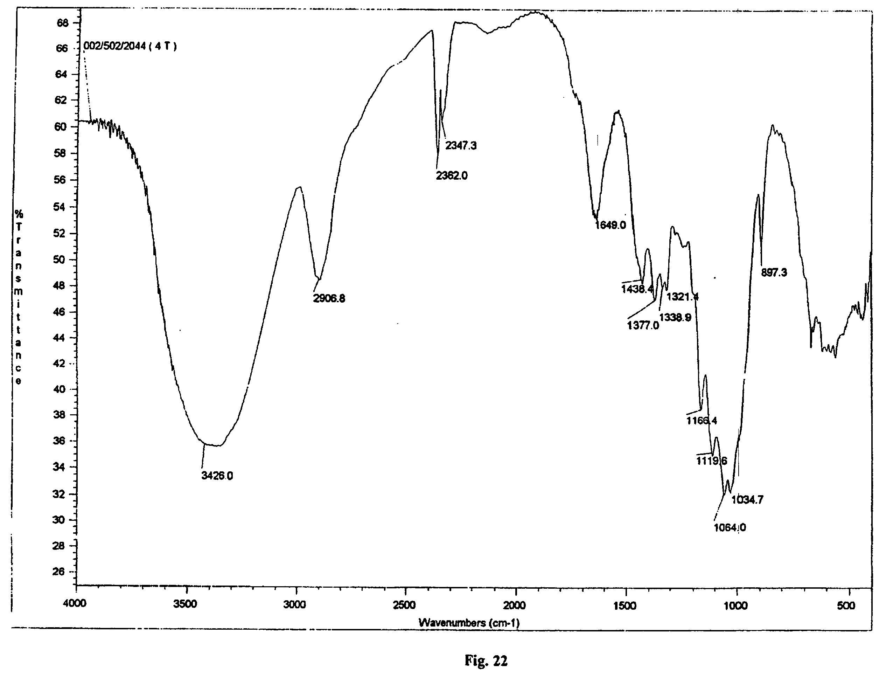

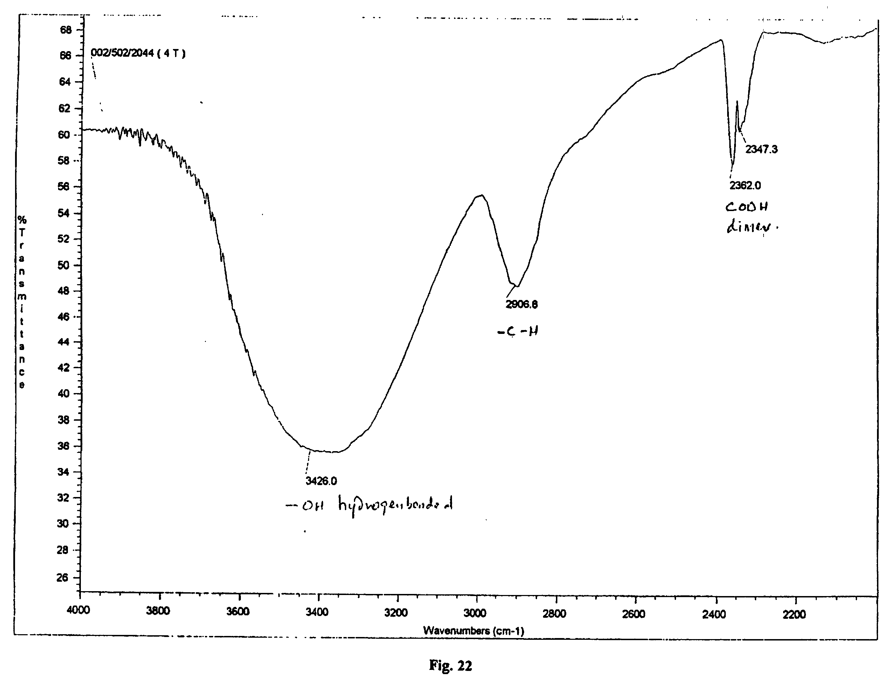

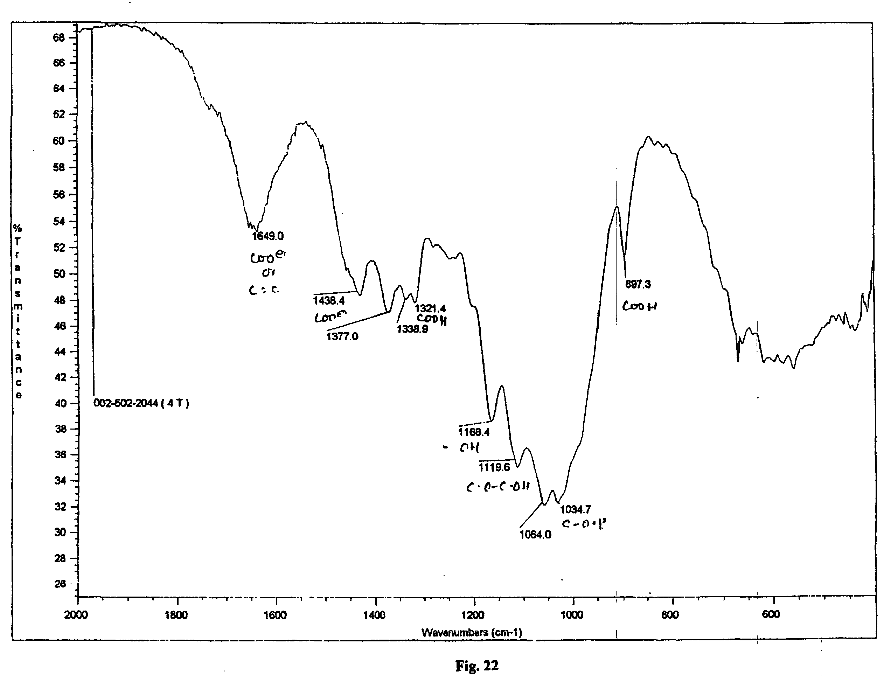

Figure 22 relates to IR Spectra of alkaline hydrogen peroxide treated greengram (*Vigna radiata)* seed coats which in turn treated with ferric chloride.
   As shown in IR Spectroscopy of figures 21 and 22, alkaline hydrogen peroxide treated greengram (*Vigna radiata)* seed coats resulted in many organo-metallic bonds in particular significantly at 2360 ± 10 and 2340 ± 10 wavenumbers(cm-1)

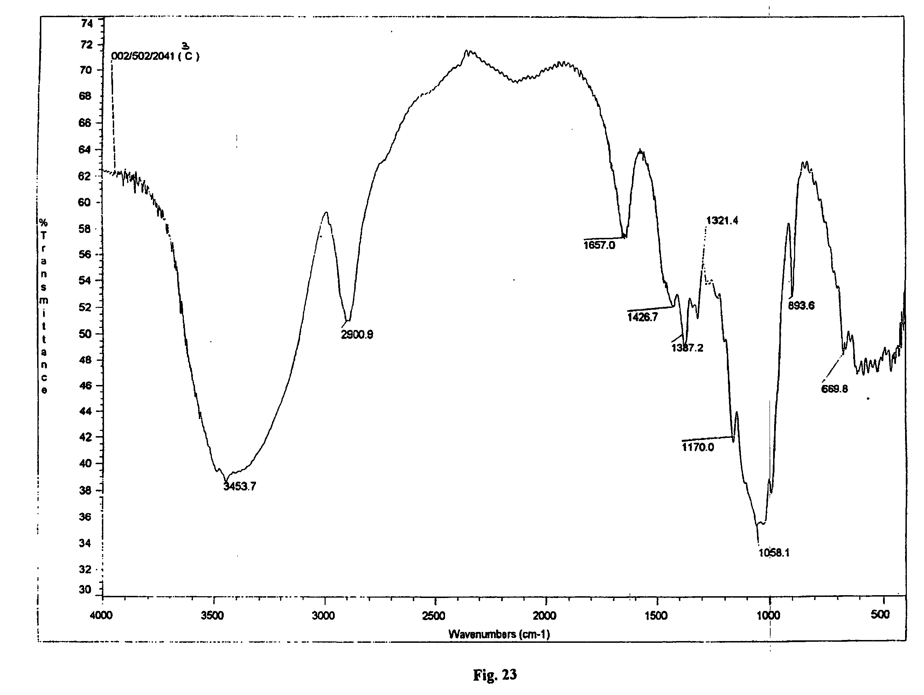

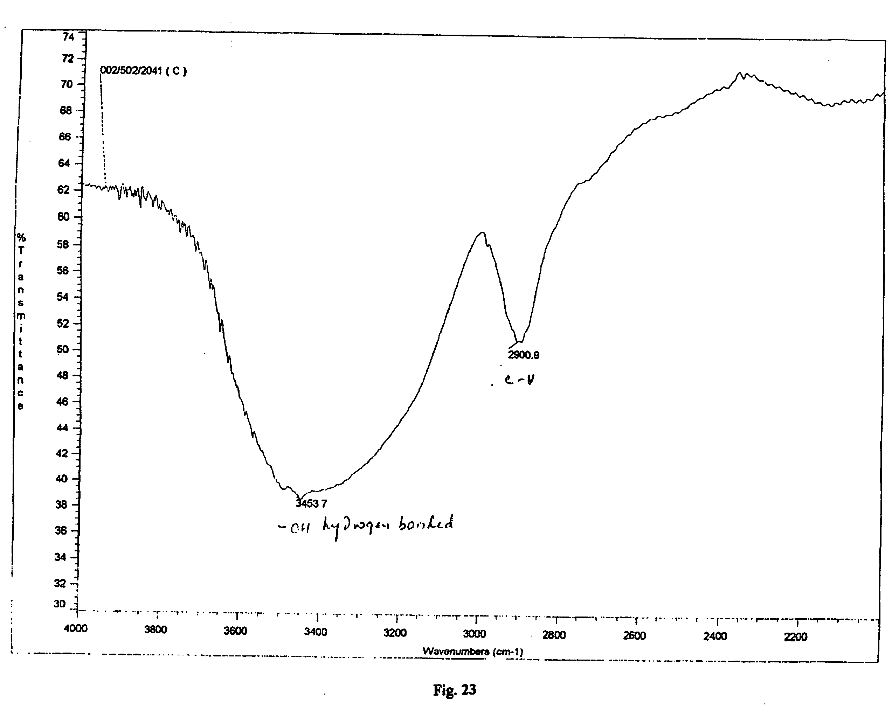

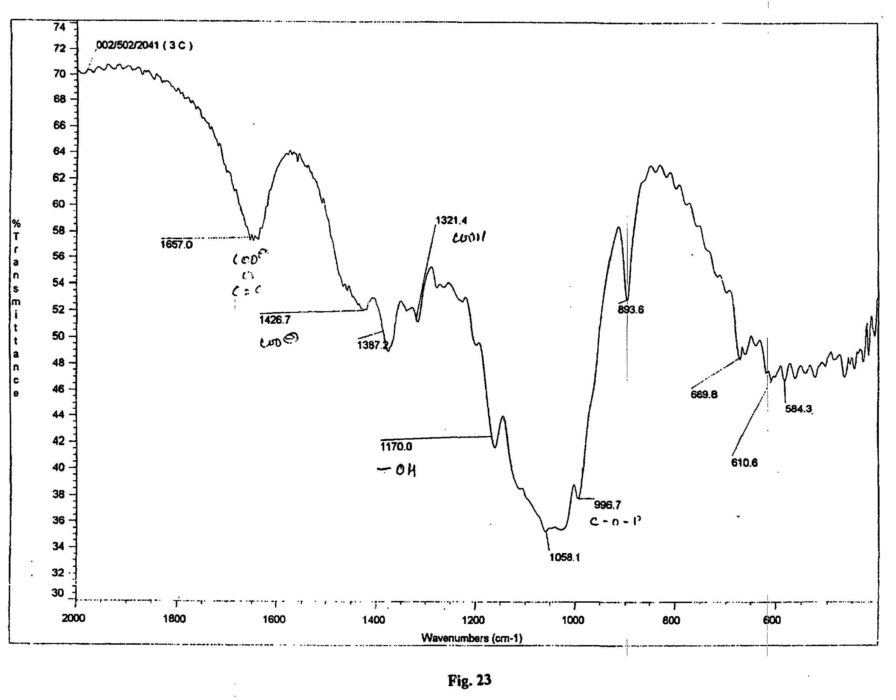

Figure 23 relates to IR Spectra of alkaline hydrogen peroxide treated blackgram (*Vigna mungo)* seed coats.

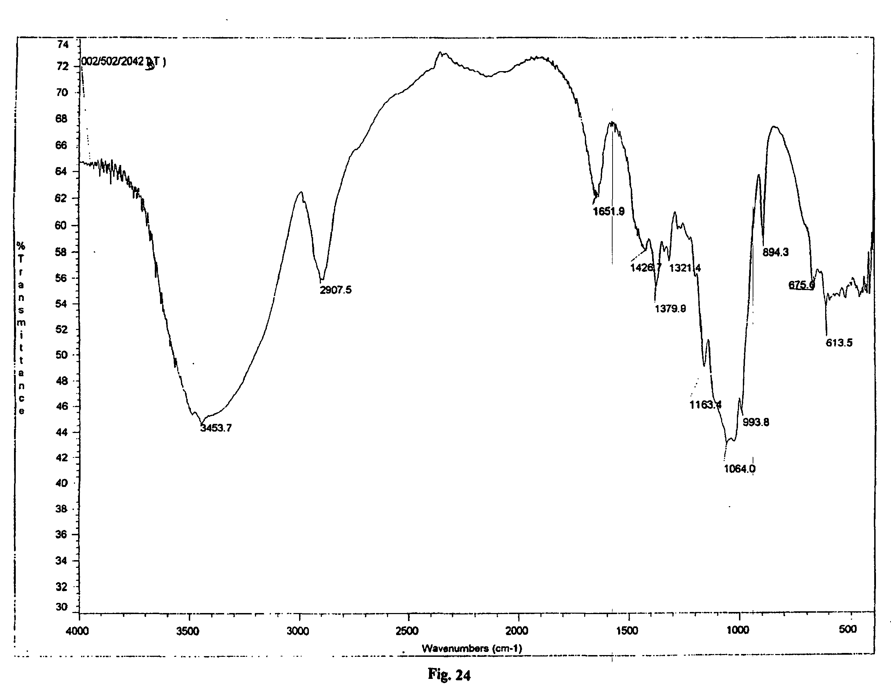

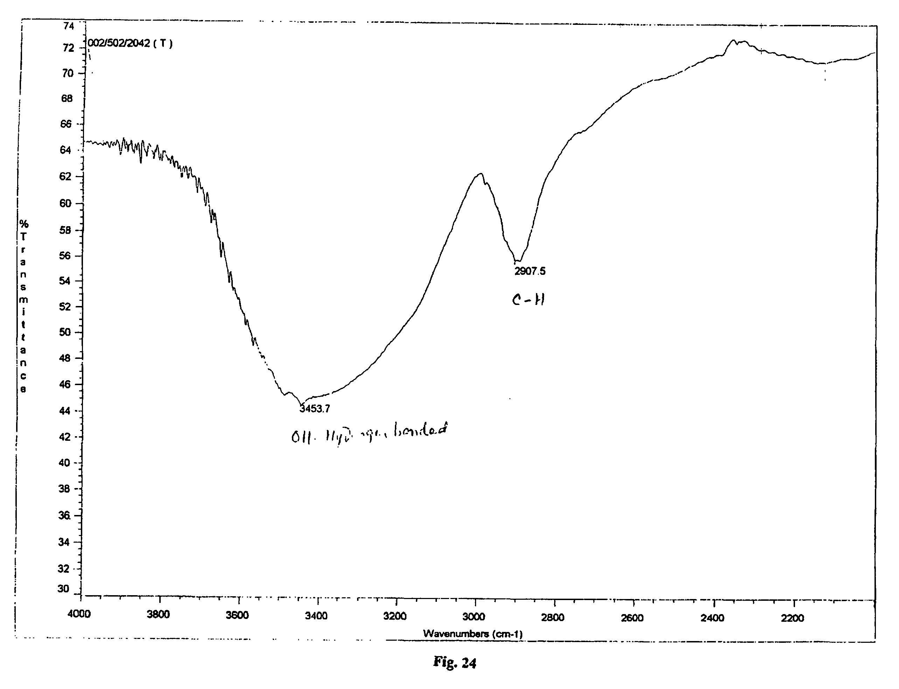

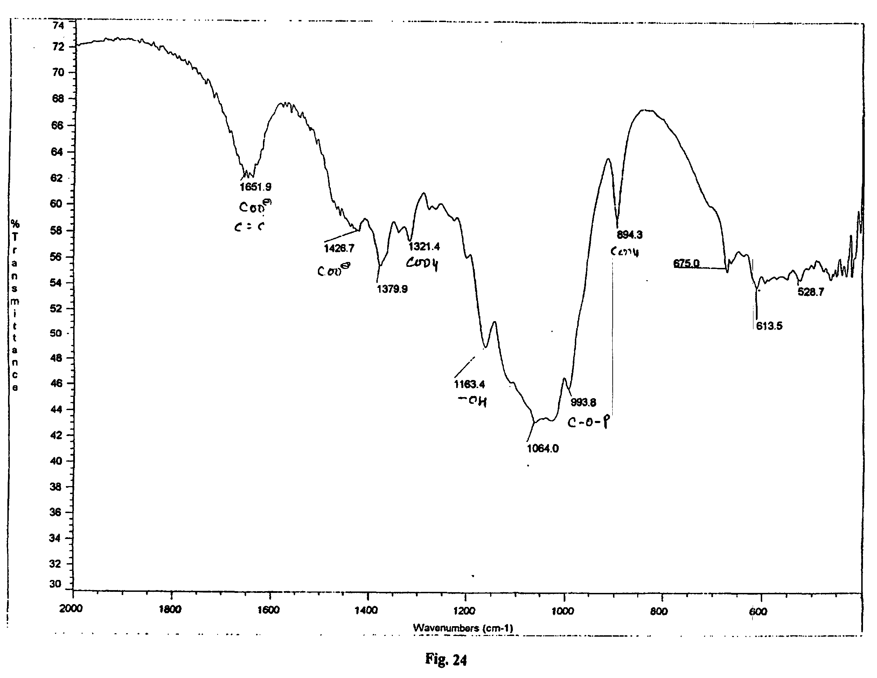

Figure 24 relates to IR Spectra of alkaline hydrogen peroxide treated blackgram (*Vigna mungo)* seed coats which in turn treated with ferric chloride.
   As shown in IR Spectroscopy of figures 23 and 24, alkaline hydrogen peroxide treated blackgram (*Vigna mungo*) seed coats resulted in many organo-metallic bonds.

Now, the applicant provide the following specific description by way of examples and illustrations of the invention.

The metal sequestering property of agropolymers derived from seed coats of agricultural crops (seed coats or hulls, from *Oryza saliva, Panicum miliaceum, Setaria italica*). When a gram agropolymer sample is taken in a 1000 ml volumetric flask and made upto the mark with 20.0 PPM of standard copper and silver solutions separately and then the solution in the flasks are kept for 2 hours with regular shaking in between, then the solution as filtered and the copper and silver present in solution was estimated Spectrophotometrically. The difference between the metal content present in solution before and after addition of agropolymer indicate the metal absorbing /sequestering ability of particular agropolymer. As shown in table - 2, agropolymers sequestered metals such as copper and silver. A gram of the *Setaria italica* agropolymers absorbed / sequestered 6.0, 4.1 milligrams of copper and silver respectively. A gram of *Panicum miliaceum* agropolymers sequestered 1.6 and 2.5 milligrams of copper and silver respectively. A gram of the *Oryza sativa* agropolymers sequestered 4.5 and 4.7 milligrams of copper and silver respectively.

Agropolymers exhibits a nature of absorbing more metal content from a solution containing high metal concentration. Using this property agropolymers were allowed to absorb more metal content in high metal concentration solutions with longer retention time (12 - 24 ) hours. Agropolymers were added to metal (such as iron or aluminium containing solutions) and unbound metal was removed by through washings with water and or neutralising with alkali in case of reaction medium is in acidic pH later the material was dried. Metal impregnated Agropolymer was taken in a beaker and to it 250 ml. Of water was added and stirred well, then the agropolymer material was filled on a column mode. The agropolymer material present in column was washed with 50 ml of I N acid to obtain bound metal. The metal content in acid washings were estimated by Spectrophotometrically. Table - 3 denotes the amount of metal content bound on agropolymer. A gram of *Setaria italica* agropolymer absorbed (when treated with aluminium chloride) an amount of 14.4 milligrams of aluminium. A gram of *Oryza sativa* agropolymers absorbed (when treated with aluminium sulphate) an amount of 8.6 milligrams of aluminium. A gram *of Setaria italica* Agropolymer absorbed (when treated with Ferric chloride) an amount of 4.7 milligrams of iron.

Now, the following description will illustrate the arsenic sequestering property of agropolymer. In this experiment agropolymers bound with copper, zinc and iron were taken separately for measuring the arsenic sequestering nature.

One gram of agropolymer was added to 100 ml. Solution containing 6.6 PPM sodium arsenate and stirred will for a period of 3 to 4 hours. The arsenic content present in supernatant was estimated by Spectophotometrically. As shown in Table 4, metal impregnated agropolymers, absorbed arsenic from aqueous solutions. Copper, iron and zinc impregnated *Setaria italica* agropolymers absorbed about 73 - 75 percent of arsenic from an initial arsenic amount of 6.6. PPM.

Agropolymers without metal impregnation also absorbs arsenic. As shown in Table 5, agropolymers reduced significantly arsenic content from natural waters containing arsenic.

In the following description the fluoride removal property of agropolymer will be described. As it is agropolymer can not absorb any fluoride ion but when agropolymer was bound with metals such as aluminium, the metal bound agropolymer can absorb fluoride ions significantly. Agropolymers bound with aluminium sulphate were added to a solution containing 5 PPM sodium fluoride (1000 milligrams of metal impregnated agropolymer was added to 50 ml of 5 PPM sodium fluoride) these metal bound agropolymers absorbed fluoride ion, 77.4 and 90.87 % respectively. Similarly, these metal bound agropolymers removed fluoride ion from natural water containing fluoride. When a natural water having 4.15 PPM fluoride content was mixed with (1) Aluminium chloride impregnated *Setaria Italica.* Agropolymer and (2) Aluminium Sulphate impregnated *Oryza Sativa* Agropolymer at a dose of 1 gm. Per liter removed fluoride ion significantly.

Now, this invention will describe the important parameters for metal sequestration and bound metal elution. The said substances effective use is dependant on suitable pH for metal sequestration. The bound metals in the said substances can be eluted with mineral acids including sulfuric, nitric or hydrochloric at 0.8 - 1.0 pH.

One of the salient features of the invention is the identification of metal or ion sequestering property of agropolymers present in seed coats or hulls of agricultural crops and utilisation of agropolymers in water treatment.

Another salient feature of the invention is that the agropolymers are useful on column mode or batch mode and suitable for repeated usage on many cycles to remove or sequester various metals form PPM to PPB level.

Metal impregnated agropolymers were found useful in fluoride ion sequestration and metal absorption such as arsenic. The said substance sequestering ability is maximum at neutral pH range for most of the metals tested. The most of the bound metals present in said substances (agropolymers) can be eluted with mineral acids including sulfuric, nitric and hydrochloric at 0.8 - 1.0 pH. The agropolymers are suitable for repeated usage on column or batch mode offers an economic advantage.

The agropolymers have extensive industrial applications. They can be effectively used for pollution control to protect environment from metal or ion contamination. The wide application of the said substance is the subject matter of invention. Accordingly, this invention pertains to a method of removing metals and ions from contaminated water by either column method or batch method, so that the toxicity causing metals and ions are removed from water.

Now, it is essential to summarise the findings of the investigation carried by the applicant and the findings are given in the following Tables 1 to 5:-
Table - 1 denotes the metal (iron) sequestering property of agropolymers derived from *Oryza sativa, Panicum miliaceum, Setaria italica, Cajanus cajan, Vigna mungo, Vigna radiata, Triticum sp., Ricinus communis, Helianthus annus, Gossypium sp. Arachis sp.* by alkaline hydrogen peroxide treatment. Ferric chloride solution was passed through a gram of agropolymer in a column at a flow rate of 2ml per minute and bound metal content was estimated by eluting with 2 - 5% hydrochloric acid. Before elution, the unbound excess metal from column was removed by washing with 2.5pH hydrochloric acid solution. The bound metal was estimated using par reagent at 535n.m. spectrophotometrically.
Table -2 denotes the metals sequestering property of agropolymers derived form seed coats or hulls, by alkaline treatment of *Setaria italica, panicum miliaceum,* and *Oryza saliva,* sequestered copper and silver.
Table - 3 denotes the metal impregnation (aluminium and iron) on agropolymers derived from seed coats or hulls from *Setaria italica*, and *Oryza sativa.*
Table - 4 denotes the arsenic sequestering property of metal impregnated Agropolymer (copper, iron, zinc impregnated on Agropolymer derived from seed coats or hulls form *Setaria italica*).
Table - 5 denotes the arsenic sequestering property of agropolymers from natural waters containing arsenic.
Present invention explains the ion (fluoride) removal or sequestering property of metal impregnated agropolymers (aluminium impregnated on agropolymers derived from seed coats or hulls from *Setaria italica* and *Oryza sativa*).

The results derived from the present invention gives a scope of using agropolymers and metal impregnated agropolymers using in affinity columns to purify or bind or remove or sequester or react with reactive substances useful for various industrial applications (such as using these agropolymers in manufacturing of various derivatives such as Biodegradable plastics, resins) including using agropolymers for reducing ground water contamination by industrial waste water containing metals and ions.

**TABLE - 1**

| **METAL (IRON) SEQUESTERING PROPERTY OF AGROPOLYMERS PRODUCED BY ALKALINE PEROXIDE TREATMENT METHOD** | | |
|---|---|---|
| S.No. | AGROPOLYMER PRODUCED FROM SEED COATS OR HULLS OF: | IRON CONTENT (MILLIGRAM) SEQUESTERED BY A GRAM OF AGROPOLYMER |
| 1. | *Oryza sativa* | 5.15 |
| 2. | *Panicum miliaceum* | 3.125 |
| 3. | *Setaria italica* | 5.0 |
| 4. | *Cajanus cajan* | 11.75 |
| 5. | *Vigna mungo* | 6.875 |
| 6. | *Vigna radiata* | 17.18 |
| 7. | *Triticum sp.* | 3.125 |
| 8. | *Ricinus communis* | 2.3 |
| 9. | *Helianthus annus* | 11.25 |
| 10. | *Gossypium sp.* | 6.25 |
| 11. | *Arachis sp. (Red seed coat or cover of groundnut)* | 20.56 |

**TABLE - 2**

| **METAL SEQUESTERING PROPERTY OF AGROPOLYMERS PRODUCED BY ALKALINE TREATMENT METHOD** | | | |
|---|---|---|---|
| S.NO | AGROPOLYMER PRODUCED FROM SEED COATS OR HULLS OF: | COPPER CONTENT (MILLIGRAM) SEQUESTERED BY A GRAM OF AGROPOLYMER | SILVER CONTENT (MILLIGRAM) SEQUESTERED BY A GRAM OF AGROPOLYMER |
| 1 | *Setaria italica* | 6.0 | 4.1 |
| 2. | *Panicum miliaceum* | 1.6 | 2.5 |
| 3. | *Oryza sativa* | 4.5 | 4.7 |

**TABLE - 3**

| **BOUND METAL CONTENT PRESENT IN METAL IMPREGNATED AGROPOLYMERS PRODUCED BY ALKALINE TREATMENT METHOD** | | |
|---|---|---|
| S.NO | AGROPOLYMER PRODUCED FROM SEED COATS OR HULLS + METAL | METAL CONTENT (MILLIGRAM) SEQUESTERED BY A GRAM OF AGROPOLYMER |
| 1 | *Setaria italics* + ALUMINIUM CHLORIDE | 14.4 |
| 2. | *Oryza sativa* + ALUMINIUM SULPHATE | 8.6 |
| 3. | *Setaria italica* + FERRIC CHLORIDE | 4.7 |

**TABLE - 4**

| **ARSENIC SEQUESTERING PROPERTY OF METAL IMPREGNATED AGROPOLYMERS PRODUCED BY ALAKALINE TREATMENT METHOD** | | | |
|---|---|---|---|
| S.NO | AGROPOLYMER PRODUCED FROM SEED COATS OR HULLS + METAL | INITIAL ARSENIC CONTENT (PPM) | ARSENIC SEQUESTERED BY A GRAM OF AGROPOLYME R (PER CENTAGE) |
| 1. | Setaria italica + COPPER SULPHATE + IMPREGNATED | 6.6 | 73.18 |
| 2. | Setaria italica + FERRIC CHLORIDE IMPREGNATED | 6.6 | 73.3 |
| 3. | *Setaria italica* + ZINC CHLORIDE IMPREGNATED | 6.6 | 75 |

**TABLE - 5**

| ARSENIC SEQUESTERING PROPERTY OF AGROPOLYMERS FROM NATURAL WATERS CONTAINING ARSENIC | | | |
|---|---|---|---|
| SI.No. | AGROPOLYMER PRODUCED FROM SEED COATS OR HULLS | INITIAL ARSENIC CONTENT PRESENT IN NATURAL WATERS | ARSENIC CONTENT PRESENT IN NATURAL WATERS AFTER TREATMENT WITH AGROPOLYMERS FOR 12 HOURS |
| 1. | *Setaria italica* | 325 PPB | 40PPB |
| 2. | *Oryza sativa* | 325 PPB | 50PPB |
| * The natural waters containing arsenic samples were collected from West Bengal State in India. | | | |

### Advantages:

The novel agropolymers obtained from plant materials preferably from seed coats or hulls of agricultural crops (such as seed coats or hulls, from agricultural plants such as *Oryza sativa, Panicum miliaceum, Setaria italica, Cajanus cajan, Vigna mungo, Vigna radiata, Triticum sp., Ricinus communis, Helianthus annus. Gossypium sp. Arachis sp*.,) are non-toxic biodegradable plant materials suitable for easy disposal which can be produced at relatively cheaper cost. The properties of agropolymers offers scope of their utility in affinity chromatography systems, as materials to remove or bind or purify or react through immobilisation with reactive molecules through column or batch mode and scope of utility in manufacturing of biodegradable plastics, resins, carrier materials etc. This economically viable technically feasible production method of agropolymers is useful for environmental protection and has extensive industrial applications and further helps farmers to get more income as the raw materials are from agricultural sources.

The novel metal and ion sequestered agropolymers preferably form seed coats of agricultural crops are capable of metal load removal from PPM to PPB level and these substances be produced at relatively cheaper cost compared to other plant derived metal sequestering substances.

Accordingly, a few of the advantages of this invention are summarised as follows:-
1. The invented agropolymers are from natural origin.
2. The process of pollution control using agropolymer is extremely simple.
3. The method or process to prevent environmental degradation by these agropolymers is effective as they can reduce metal or ions load from PPM to PPB level. Therefore, pollution free water without toxic substances is obtained.
4. Agropolymers are environmental friendly and biodegradable.
5. The process of purification of polluted water is economically viable and technically feasible.

## Claims

1. An agropolymer comprising carbohydrate and/or silica matrix obtained from crops selected from *Oryza sativa, Panicum miliaceum, Setaria italica, Cajanus cajan, Vigna mungo, Vigna radiata, Triticum sp., Ricinus communis, Helianthus annus, Gossypium sp. Arachis sp,* said matrix being substantially devoid of proteins, tannins and polyphenols and having metal binding reactive sites.

2. An agropolymer as claimed in claim **1** wherein the carbohydrate matrix is obtained from plant parts selected from seed coats, seed covers, hulls, husks and raw husk.

3. An agropolymer as claimed in claim 1 wherein the raw husk is micronized and IR Spectroscopy is effected with KBr pellet and the samples are treated with ferric chloride and dried, which sample when subjected to IR Spectroscopy revealing reactive bonds i.e. organo-metallic bonds.

4. An agropolymer as claimed in claim 1 wherein IR Spectroscopy effected husk of *Triticum sp* reveals organo-metallic bonds significantly at 2360 ± 10 and 2340 ± 10 wave numbers(cm-1).

5. An agropolymer as claimed in claim 1 wherein IR Spectroscopy effected with KBr pellet after alkaline hydrogen peroxide treatment of *Gossypium sp* and *Vigna radiata* coat reveals organo-metallic bonds significantly at 2360 ± 10 and 2340 ± 10 wave numbers(cm-1).

6. An agropolymer as claimed in claim 1 wherein IR Spectroscopy effected with KBr pellet after alkaline hydrogen peroxide treatment of *Panicum miliaceum, Setaria italica, Cajanus cajan, Vigna mango, Ricinus communis, Helianthus annus* coats revealed organo metallic bonds characteristic of each material.

7. A method of producing agropolymers comprising a matrix of carbohydrate obtained from agricultural crops selected from *Oryza sativa, Panicum miliaceum, Setaria italica, Cajanus cajan, Vigna mungo, Vigna radiata, Triticum sp., Ricinus communis, Helianthus annus, Gossypium sp. Arachis sp,* said matrix being substantially devoid of proteins, tannins and polyphenols and having metal binding reactive sites, said method comprising the following steps:-
a) powdering the plant material,
b) micronization of plant material to required microns size,
c) treating the said micronized plant material with alkali or alkaline hydrogen peroxide or hydrogen peroxide,
d) treating the said material with repeated washings with water or with acid to remove alkali and or hydrogen peroxide residue,
e) treating the said material with acid solution to remove bound metals,
f) neutralizing the said molecules by removal of acid by way of water washings or by addition of diluted alkali solution, and
g) drying the resultant agropolymers at room temperature or with a dryer (70-80°C).

8. A method as claimed in claim 7 wherein, the powdering of the plant material performed by grinding with grinders.

9. A method as claimed in claim 7 wherein, the micronization of seed, husk and coat or hull powder is effected using micronizer to obtain desired particle size (in microns).

10. A method as claimed in claim 7 wherein, the plant material is selected from seed coats, busks or hulls of crops.

11. A method as claimed in claim 7 wherein, the alkali treatment is effected with sodium carbonate followed by hydrogen peroxide.

12. A method as claimed in claim 7 wherein, the alkali treatment is effected by adding the alkali solution to the agropolymers.

13. A method as claimed in claim 7 wherein, the alkali treatment is effected by adding alkali powder/flakes directly in dry state to agropolymers followed by addition of water.

14. A method as claimed in claim 7 wherein, the alkali and/or peroxide residual amount after treatment is removed by repeated water washings.

15. A method as claimed in claim 7 wherein, the alkali and/or peroxide residual amount after treatment is removed by addition of diluted acid (using such as H₂SO₄, HCl or HNO₃) separately.

16. A method as claimed in claim 7 wherein, the bound metals present in agropolymers is eluted with 1-3% acid solutions (using such as H₂SO₄, HCl or HNO₃).

17. A method as claimed in claim 7 wherein, acid residues were removed by repeated water washings.

18. A method as claimed in claim 7 wherein, acid residues are removed by addition of diluted alkali (using such as NaOH or KOH) solutions.

19. A method as claimed in claim 7 wherein, the moisture content is removed after decantation of supernatant by drying in a dryer (70-80°C).

20. A method as claimed in claim 7 wherein, the moisture content is removed after decantation of supernatant by drying at room temperature.

21. A method of purifying of metal and ion polluted / contaminated aqueous solutions including metal or ion polluted drinking water or ground water, by treating the polluted water with metal impregnated agropolymers and/or agropolymers comprising carbohydrate and/or silica matrix, said matrix being substantially devoid of proteins, tannins and polyphenols and having metal binding reactive sites, the said agropolymers being manufactured from plant materials such as seed coats, husks or hulls of agricultural crops selected from *Oryza sativa, Panicum miliaceum, Setaria italica, Cajanus cajan, Vigna mungo, Vigna radiata, Triticum sp., Ricinus communis, Helianthus annus, Gossypium sp. Arachis sp*.), said method comprising the steps of contacting the ions or metal polluted water with metal impregnated agropolymers and/or agropolymers, using a column or batch mode, effecting the ion or metal sequestration resulting in pollution free water, the said sequestration being carried out under optimum conditions for maximum sequestration efficiency.

22. A method as claimed in claim 21 wherein, the agropolymers removes metal ions from aqueous solutions.

23. A method as claimed in claim 21 wherein, the agropolymers removes arsenic from aqueous solutions.

24. A method as claimed in claim 21 wherein, the method comprises contacting the ion or metal polluted water with agropolymers or metal impregnated agropolymers using batch or column mode, effecting the ion or metal sequestration resulting in pollution free water, the said sequestration being carried out under optimum conditions as pH for maximum sequestration efficiency.

25. A method as claimed in claim 21 wherein, the agropolymers are used for treating natural ground water rich in toxic metals such as arsenic or mercury to obtain substantially pure or portable water.

26. A method as claimed in claim 21 wherein, the agropolymers are used to prevent potential contamination of ground water by unwanted metals and/or ions in many industrial sites and effluent treatment plants.

## Revendications

1. Agropolymère comprenant une matrice d'hydrate de carbone et/ou de silice obtenue à partir de végétaux choisis parmi *Oryza sativa, Panicum miliaceum, Setaria italica, Cajanus cajan, Vigna mungo, Vigna radiata, Triticum sp., Ricinus communis, Helianthus annus, Gossypium sp., Arachis sp.,* ladite matrice étant substantiellement dépourvue de protéines, tannins et polyphénols et possédant des sites réactifs de liaison métallique.

2. Agropolymère selon la revendication 1, où la matrice d'hydrate de carbone est obtenue à partir de parties de végétaux choisies parmi des écalures, des enveloppes de graines, des cosses, des balles et des balles brutes.

3. Agropolymère selon la revendication 1, où la balle brute est micronisée et l'on procède à une spectroscopie IR avec pastille de KBr et les échantillons sont traités par du chlorure ferrique et séchés, l'échantillon étant ensuite soumis à une spectroscopie IR révélant les liaisons réactives, c'est-à-dire les liaisons organométalliques.

4. Agropolymère selon la revendication 1, où la spectroscopie IR effectuée sur la balle de *Triticum sp.* révèle des liaisons organométalliques de manière significative à des nombres d'onde de 2360 ± 10 et 2340 ± 10 (cm⁻¹).

5. Agropolymère selon la revendication 1, où la spectroscopie IR effectuée avec pastille de KBr après traitement au peroxyde d'hydrogène alcalin d'écalures de *Gossypium sp.* et *Vigna radiata* a révélé des liaisons organométalliques de manière significative à des nombres d'onde de 2360 ± 10 et 2340 ± 10 (cm⁻¹).

6. Agropolymère selon la revendication 1, où la spectroscopie IR effectuée avec pastille de KBr après traitement au peroxyde d'hydrogène alcalin d'écalures de *Panicum miliaceum, Setaria italica, Cajanus cajan, Vigna mungo, Ricinus communis, Helianthus annus* a révélé des liaisons organométalliques caractéristiques de chaque matière.

7. Procédé de production d'agropolymères comprenant une matrice d'hydrate de carbone obtenue à partir de végétaux agricoles choisis parmi *Oryza sativa, Panicum miliaceum, Setaria italica, Cajanus cajan, Vigna mungo, Vigna radiata, Triticum sp., Ricinus communis, Helianthus annus, Gossypium sp., Arachis sp.,* ladite matrice étant substantiellement dépourvue de protéines, tannins et polyphénols et possédant des sites réactifs de liaison métallique, ledit procédé comprenant les étapes suivantes:
a) réduction de la matière végétale en poudre,
b) micronisation de la matière végétale au calibre micronique requis,
c) traitement de ladite matière végétale micronisée par une base ou du peroxyde d'hydrogène alcalin ou du peroxyde d'hydrogène,
d) traitement de ladite matière par des lavages répétés à l'eau ou au moyen d'un acide afin d'éliminer les résidus de base et/ou de peroxyde d'hydrogène,
e) traitement de ladite matière par une solution acide afin d'éliminer les métaux liés,
f) neutralisation desdites molécules par élimination de l'acide au moyen de lavages à l'eau ou par addition d'une solution alcaline diluée, et
g) séchage des agropolymères résultant à la température ambiante ou au moyen d'un séchoir (70 - 80°C).

8. Procédé selon la revendication 7, où la matière végétale est réduite en poudre par broyage au moyen de meules.

9. Procédé selon la revendication 7, où la micronisation des graines, balles et écalures ou cosses en poudre est effectuée au moyen d'un microniseur afin d'obtenir la taille de particules souhaitée (en microns).

10. Procédé selon la revendication 7, où la matière végétale est choisie parmi des écalures, des balles ou des cosses de végétaux.

11. Procédé selon la revendication 7, où le traitement alcalin est entrepris au moyen de carbonate de sodium suivi de peroxyde d'hydrogène.

12. Procédé selon la revendication 7, où le traitement alcalin est entrepris par addition de la solution alcaline aux agropolymères.

13. Procédé selon la revendication 7, où le traitement alcalin est entrepris par addition de poudres/flocons alcalins directement à l'état sec aux agropolymères, puis addition d'eau.

14. Procédé selon la revendication 7, où la quantité résiduelle de base et/ou de peroxyde après traitement est éliminée par des lavages à l'eau répétés.

15. Procédé selon la revendication 7, où la quantité résiduelle de base et/ou de peroxyde après traitement est éliminée séparément par addition d'acide dilué (en utilisant un acide tel que H₂SO₄, HCl ou HNO₃).

16. Procédé selon la revendication 7, où les métaux liés présents dans les agropolymères sont élués au moyen de solutions acides à 1 - 3% (en utilisant un acide tel que H₂SO₄, HCl ou HNO₃).

17. Procédé selon la revendication 7, où les résidus d'acide sont éliminés par des lavages à l'eau répétés.

18. Procédé selon la revendication 7, où les résidus d'acide sont éliminés par addition de solutions alcalines diluées (en utilisant des bases telles que NaOH ou KOH).

19. Procédé selon la revendication 7, où la teneur en humidité est éliminée après décantation du surnageant par séchage dans un séchoir (70 - 80°C).

20. Procédé selon la revendication 7, où la teneur en humidité est éliminée après décantation du surnageant par séchage à la température ambiante.

21. Procédé de purification de solutions aqueuses polluées/contaminées par des métaux et des ions, y compris des eaux potables ou des nappes phréatiques polluées par des métaux ou des ions, par traitement de l'eau polluée au moyen d'agropolymères imprégnés de métal et/ou d'agropolymères comprenant une matrice d'hydrate de carbone et/ou de silice, ladite matrice étant substantiellement dépourvue de protéines, tannins et polyphénols et possédant des sites réactifs de liaison métallique, lesdits agropolymères étant fabriqués à partir de matières végétales telles que des écalures, des balles ou des cosses de végétaux agricoles choisis parmi *Oryza sativa, Panicum miliaceum, Setaria italica, Cajanus cajan, Vigna mungo, Vigna radiata, Triticum sp., Ricinus communis, Helianthus annus, Gossypium sp., Arachis sp.,* ledit procédé comprenant les étapes de mise en contact de l'eau polluée par des ions ou des métaux avec des agropolymères imprégnés de métal et/ou des agropolymères, en utilisant une colonne ou en mode discontinu, en réalisant une séquestration de l'ion ou du métal avec production d'une eau exempte de pollution, ladite séquestration étant exécutée dans des conditions optimales pour une efficacité maximale de la séquestration.

22. Procédé selon la revendication 21, où les agropolymères éliminent des ions métalliques de solutions aqueuses.

23. Procédé selon la revendication 21, où les agropolymères éliminent l'arsenic de solutions aqueuses.

24. Procédé selon la revendication 21, où le procédé comprend la mise en contact de l'eau polluée par des ions ou des métaux avec des agropolymères ou des agropolymères imprégnés de métal, sur colonne ou en mode discontinu, en réalisant une séquestration de l'ion ou du métal avec production d'eau exempte de pollution, ladite séquestration étant exécutée dans des conditions optimales de pH pour une efficacité maximale de la séquestration.

25. Procédé selon la revendication 21, où les agropolymères sont utilisés pour le traitement de nappes phréatiques naturelles riches en métaux toxiques tels que l'arsenic ou le mercure, afin d'obtenir une eau essentiellement pure ou potable.

26. Procédé selon la revendication 21, où les agropolymères sont utilisés pour prévenir une contamination potentielle de nappes phréatiques par des métaux et/ou des ions indésirables dans de nombreux sites industriels et stations d'épuration d'eaux résiduaires.

## Patentansprüche

1. Agropolymer mit Kohlenhydrat- und/oder Silikamatrix aus Kulturpflanzen aus der Reihe *Oryza sativa, Panicum miliaceum, Setaria italica, Cajanus cajan, Vigna mungo, Vigna radiata, Triticum sp., Ricinus communis, Helianthus annuus, Gossypium sp., Arachis sp.,* wobei diese Matrix im wesentlichen frei von Proteinen, Tanninen und Polyphenolen ist und reaktionsfähige Metallbindungsstellen aufweist.

2. Agropolymer nach Anspruch 1, bei dem die Kohlenhydratmatrix aus Pflanzenteilen aus der Reihe Samenschalen, Samenhüllen, Hülsen, Spelzen und Rohspelzen erhalten wird.

3. Agropolymer nach Anspruch 1, bei dem die Rohspelzen mikronisiert werden und eine IR-Spektroskopie mit einem KBr-Pellet durchgeführt wird und die Proben mit Eisen(III)-chlorid behandelt und getrocknet werden, wobei diese Proben bei Untersuchung mittels IR-Spektroskopie reaktionsfähige Bindungen, d.h. metallorganische Bindungen, aufweisen.

4. Agropolymer nach Anspruch 1, bei dem mit IR-Spektroskopie untersuchte *Triticum sp.*-Spelzen im wesentlichen metallorganische Bindungen bei Wellenzahlen bei 2360 ± 10 und 2340 ± 10 (cm-1) aufweisen.

5. Agropolymer nach Anspruch 1, bei dem *Gossypium sp.- und Vigna radiata*-Schalen, die nach Behandlung mit alkalischem Wasserstoffperoxid mit einer mit einem KBr-Pellet durchgeführten IR-Spektroskopie untersucht wurden, im wesentlichen metallorganische Bindungen bei Wellenzahlen bei 2360 ± 10 und 2340 ± 10 (cm-1) aufweisen.

6. Agropolymer nach Anspruch 1, bei dem Schalen von *Panicum miliaceum, Setaria italica, Cajanus cajan, Vigna mungo, Ricinus communis, Helianthus annuus,* die nach Behandlung mit alkalischem Wasserstoffperoxid mit einer mit einem KBr-Pellet durchgeführten IR-Spektroskopie untersucht wurden, metallorganische Bindungen, die für jedes Material charakteristisch sind, aufweisen.

7. Verfahren zur Herstellung von Agropolymeren mit Kohlenhydrat- und/oder Silikamatrix aus landwirtschaftlichen Kulturpflanzen aus der Reihe *Oryza sativa, Panicum miliaceum, Setaria italica, Cajanus cajan, Vigna mungo, Vigna radiata, Triticum sp., Ricinus communis, Helianthus annuus, Gossypium sp., Arachis sp.,* wobei diese Matrix im wesentlichen frei von Proteinen, Tanninen und Polyphenolen ist und reaktionsfähige Metallbindungsstellen aufweist, das die folgenden Schritte umfaßt:
a) Pulverisieren des Pflanzenmaterials,
b) Mikronisieren des Pflanzenmaterials auf die erforderliche Größe in Mikron,
c) Behandlung des mikronisierten Pflanzenmaterials mit Alkali oder alkalischem Wasserstoffperoxid oder Wasserstoffperoxid,
d) Behandeln des Materials durch wiederholtes Waschen mit Wasser oder mit Säure, um Alkalioder Wasserstoffperoxidreste zu entfernen,
e) Behandeln des Materials mit Säurelösung, um gebundene Metalle zu entfernen,
f) Neutralisieren der Moleküle durch Entfernen der Säure durch Waschen mit Wasser oder durch Zugabe einer verdünnten Alkalilösung und
g) Trocknen der erhaltenen Agropolymere bei Raumtemperatur oder mit einem Trockner (70-80°C).

8. Verfahren nach Anspruch 7, bei dem das Pflanzenmaterial durch Mahlen mit Mühlen pulverisiert wird.

9. Verfahren nach Anspruch 7, bei dem das Samen-, Spelzen- und Schalen- oder Hülsenpulver mit einer Strahlmühle mikronisiert werden, um zu einer gewünschten Teilchengröße (in Mikron) zu gelangen.

10. Verfahren nach Anspruch 7, bei dem das Pflanzenmaterial aus der Gruppe Samenschalen, Spelzen oder Hüllen von Kulturpflanzen stammt.

11. Verfahren nach Anspruch 7, bei dem die Alkalibehandlung mit Natriumcarbonat und anschließend Wasserstoffperoxid durchgeführt wird.

12. Verfahren nach Anspruch 7, bei dem die Alkalibehandlung durch Zugabe der Alkalilösung zu den Agropolymeren durchgeführt wird.

13. Verfahren nach Anspruch 7, bei dem die Alkalibehandlung dadurch durchgeführt wird, daß man Alkalipulver/-flocken direkt im trockenen Zustand zu den Agropolymeren zugibt, wonach man Wasser zugibt.

14. Verfahren nach Anspruch 7, bei dem die restliche Alkali- und/oder Peroxidmenge nach der Behandlung durch wiederholtes Waschen mit Wasser entfernt wird.

15. Verfahren nach Anspruch 7, bei dem die restliche Alkali- und/oder Peroxidmenge nach der Behandlung separat durch Zugabe von verdünnter Säure (wie zum Beispiel H₂SO₄, HCl oder HNO₃) entfernt wird.

16. Verfahren nach Anspruch 7, bei dem die in den Agropolymeren vorhandenen gebundenen Metalle mit 1-3%igen Säurelösungen (wie H₂SO₄, HCl oder HNO₃) eluiert werden.

17. Verfahren nach Anspruch 7, bei dem Säurereste durch wiederholtes Waschen mit Wasser entfernt werden.

18. Verfahren nach Anspruch 7, bei dem Säurereste durch Zugabe von verdünnten Alkalilösungen (wie NaOH oder KOH) entfernt werden.

19. Verfahren nach Anspruch 7, bei dem der Feuchtigkeitsgehalt nach Abdekantieren des Überstands durch Trocknen in einem Trockner (70-80°C) entfernt wird.

20. Verfahren nach Anspruch 7, bei dem der Feuchtigkeitsgehalt nach Abdekantieren des Überstands durch Trocknen bei Raumtemperatur entfernt wird.

21. Verfahren zur Reinigung von mit Metallen und Ionen verunreinigten/belasteten wäßrigen Lösungen, darunter auch mit Metallen oder Ionen verunreinigtem Trinkwasser oder Grundwasser, dadurch, daß man das verunreinigte Wasser mit mit Metall imprägnierten Agropolymeren und/oder Agropolymeren mit einer Kohlenhydrat- und/oder Silikamatrix, wobei diese Matrix im wesentlichen frei von Proteinen, Tanninen und Polyphenolen ist und reaktionsfähige Metallbindungsstellen aufweist, behandelt, wobei diese Agropolymere aus Pflanzenmaterialien wie Samenhüllen, Spelzen oder Hülsen von landwirtschaftlichen Kulturpflanzen aus *der Reihe Oryza sativa, Panicum miliaceum, Setaria italica, Cajanus cajan, Vigna mungo, Vigna radiata, Triticum sp., Ricinus communis, Helianthus annuus, Gossypium sp., Arachis sp.* hergestellt werden, wobei das Verfahren die Schritte umfaßt, daß man das mit Ionen oder Metallen verunreinigte Wasser mit mit Metall imprägnierten Agropolymeren und/oder Agropolymeren nach dem Säulen- oder Batch-Verfahren in Kontakt bringt, wobei die Ionen oder Metalle chelatisiert werden und man von Verunreinigungen freies Wasser erhält, wobei diese Chelatisierung unter Optimalbedingungen für eine maximale Chelatisierungswirkung durchgeführt wird.

22. Verfahren nach Anspruch 21, bei dem die Agropolymere Metallionen aus wäßrigen Lösungen entfernen.

23. Verfahren nach Anspruch 21, bei dem die Agropolymere Arsen aus wäßrigen Lösungen entfernen.

24. Verfahren nach Anspruch 21, bei dem das mit Ionen oder Metallen verunreinigte Wasser mit Agropolymeren oder mit mit Metall imprägnierten Agropolymeren nach dem Batch- oder Säulenverfahren in Kontakt gebracht wird, wobei die Chelatisierung der Ionen oder Metalle zu von Verunreinigungen freiem Wasser führt, wobei diese Chelatisierung unter Optimalbedingungen für eine maximale Chelatisierungswirkung durchgeführt wird.

25. Verfahren nach Anspruch 21, bei dem die Agropolymere zur Behandlung von natürlichem Grundwasser mit einem hohen Gehalt an toxischen Metallen wie Arsen oder Quecksilber verwendet werden, wodurch man im wesentlichen reines Wasser oder Trinkwasser erhält.

26. Verfahren nach Anspruch 21, bei dem die Agropolymere zur Verhinderung einer möglichen Verunreinigung des Grundwassers durch unerwünschte Metalle und/oder Ionen an vielen Industriestandorten bzw. bei vielen Kläranlagen verwendet werden.
